(19) Europäisches Patentamt
European Patent Office
Office européen des brevets

(11) EP 3 201 261 B1

(12) EUROPÄISCHE PATENTSCHRIFT

(45) Veröffentlichungstag und Bekanntmachung des Hinweises auf die Patenterteilung:
**12.12.2018 Patentblatt 2018/50**

(21) Anmeldenummer: **15756121.8**

(22) Anmeldetag: **06.08.2015**

(51) Int Cl.:
***C08J 3/24*** $^{(2006.01)}$ ***C09J 133/14*** $^{(2006.01)}$
***C08J 5/04*** $^{(2006.01)}$ ***C08J 5/24*** $^{(2006.01)}$

(86) Internationale Anmeldenummer:
**PCT/EP2015/068137**

(87) Internationale Veröffentlichungsnummer:
**WO 2016/050398 (07.04.2016 Gazette 2016/14)**

# (54) VERFAHREN ZUR HÄRTUNG VON HÄRTBAREN ZUSAMMENSETZUNGEN

METHOD FOR CURING CURABLE COMPOSITIONS

PROCÉDÉ POUR FAIRE DURCIR DES COMPOSITIONS DURCISSABLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.10.2014 EP 14187375**

(43) Veröffentlichungstag der Anmeldung:
**09.08.2017 Patentblatt 2017/32**

(73) Patentinhaber: **BASF SE**
**67056 Ludwigshafen (DE)**

(72) Erfinder:
- **FEICHTENSCHLAGER, Bernhard**
  **83278 Traunstein (DE)**
- **SMEETS, Alfons**
  **83358 Seebruck (DE)**
- **BRUCHMANN, Bernd**
  **67251 Freinsheim (DE)**
- **THOMAS, Hans-Josef**
  **41352 Korschenbroich (DE)**
- **FLEISCHEL, Olivier**
  **F-67201 Eckbolsheim (FR)**

(74) Vertreter: **BASF IP Association**
**BASF SE**
**G-FLP-C006**
**67056 Ludwigshafen (DE)**

(56) Entgegenhaltungen:
**WO-A1-2011/006947 WO-A1-2011/141424**
**WO-A1-2015/067478**

EP 3 201 261 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren zur Härtung von vorzugsweise latent reaktiven, bei Raumtemperatur nicht aushärtenden, durch Erwärmung härtbaren Zusammensetzungen. Die Zusammensetzung enthält ein durch Reaktion von bestimmten Verbindungen mit zwei Aldehydgruppen und Polyacrylatverbindungen mit zwei oder mehr Acrylatgruppen erhältliches Polymer sowie eine Verbindung, die mindestens zwei Thiolgruppen trägt.

Kunststoffformteile werden häufig aus Duroplasten und Elastomeren durch sogenannte Infusionstechniken wie z.B. Spritzpressen, auch Resin Transfer Moulding (RTM) genannt, hergestellt. Hierbei wird die Formmasse mit fließfähiger Konsistenz mittels Kolben von einer meist beheizten Vorkammer über Verteilerkanäle in die Form eingespritzt, worin sie unter Wärme und Druck aushärtet. Als Formmasse können Formaldehydharze (z.B. Phenoplaste, Melaminharze) und Reaktionsharze (z.B. Polyesterharze oder Epoxidharze) mit kleinen Füllstoffpartikeln und Elasto-mer, gegebenenfalls in Kombination mit Fasern verwendet werden. Zu Beginn eines Zyklus befindet sich eine vorplastifizierte und dosierte Formmasse in der Vorkammer. Zunächst wird das Werkzeug geschlossen. Danach wird die Formmasse ins Werkzeug eingespritzt und für eine bestimmte Zeit im Werkzeug belassen. Bei dieser sogenannten Verweilzeit kommt es zum Reagieren oder Vulkanisieren der Formmasse. Sie ist dabei von verschiedenen Faktoren abhängig (Harztyp, Füllstoff, Verarbeitungsdruck und Verarbeitungstemperatur). Ist die Verweilzeit beendet, kann das Werkzeug geöffnet werden. Die zuvor eingefüllte Formmasse ist nun fest (ausgehärtet) und wird jetzt als Formteil bezeichnet. Dieses kann nun aus dem Werkzeug entformt werden. Um auch lange Fasern oder Faserhalbzeuge (Prewovens/Preform) zu verarbeiten, werden diese zuvor in das Werkzeug eingelegt und mit der Formmasse umspritzt. Als Injektionsharze werden Harze verwendet, die eine möglichst niedrige Viskosität besitzen. Dadurch bleibt der Strömungswiderstand beim Durchströmen der Form gering und es sind kleinere Druckdifferenzen zum Füllen notwendig. Bekannte Reaktionsharze für RTM-Verfahren (Injektionsharze) bestehen üblicherweise aus einer Harzkomponente und aus einer Härterkomponente. Niedrigreaktive Harzsysteme können bereits vor der Infusion gemischt werden. Möchte man hochreaktive Harzsysteme verwenden, so können Harz und Härter erst unmittelbar in der Infusionsleitung bzw. der Form gemischt werden. Auf diese Weise sind geringere Taktzeiten möglich. Verfahren, bei denen die Injektionsharz-Komponenten erst unmittelbar vor der Injektion gemischt werden, sind als RIM-Verfahren (Reaction Injection Moulding) bekannt.

Bei Infusionstechniken wie z.B. Spritzpressen, insbesondere beim sogenannten Resin Transfer Moulding (RTM) benötigt man idealerweise ein System mit möglichst langer Verarbeitungszeit (langer Topfzeit), damit die Form optimal gefüllt und die eingelegten Fasern optimal benetzt werden können. Danach soll das System in möglichst kurzer Zeit, gewissermaßen "auf Knopfdruck" aushärten, um eine möglichst kurze Zykluszeit zu gewährleisten. Im Stand der Technik werden hauptsächlich Epoxy-Faser-Systeme eingesetzt. Die hierbei üblicherweise verwendeten Epoxidharze zeigen jedoch ein relativ flaches Aushärteprofil, d.h. eine relativ geringe Temperaturabhängigkeit der Aushärtegeschwindigkeit. Gewünscht sind Systeme mit steilerem Aushärteprofil, d.h. mit einer relativ hohen Temperaturabhängigkeit der Aushärtegeschwindigkeit. Außerdem basieren viele Epoxysysteme auf dem nicht unbedenklichen Bisphenol A und es werden vermehrt weitere Bisphenol A-freie Alternativen als Epoxy-Ersatz in RTM-Verfahren gesucht. Härtbare Epoxyharz-Systeme werden z.B. beschrieben in der EP 2287229 A1.

Reaktive Mischungen aus Acrylaten und Thiolverbindungen sind bekannt aus EP 1275668. Hier werden die Mischungen zur sofortigen Reaktion angesetzt, eine Lagerung und Lagerfähigkeit ist nicht vorgesehen.

A.K. O'Brian, N.B. Cramer, C.N. Bowman, beschreiben in "Oxygen inhibition in Thiol-Acrylate Photopolymerizations", J. Polym. Sci., Part A: Polym. Chem. 2006, 44, 2007-2014 den Einfluss der Anwesenheit von Sauerstoff ($O_2$) auf die Copolymerisation von Acrylaten mit Thiolen in Substanz. Höherfunktionelle Thiole führen bei gleicher Konzentration an Thiolfunktionalitäten zu einer schnelleren Polymerisation, was die Stabilisierung des Systems noch schwieriger macht.

Als ein Beschichtungssystem, das durch die Anwesenheit von Sauerstoff in der Härtung weitgehend unbeeinflusst bleibt, sind Zweikomponenten Epoxyharze bekannt. Diese erfordern jedoch zur Härtung häufig toxische Amine.

WO 2012/126695 beschreibt lagerstabile Mischungen aus Polyacrylaten und Polythiolen. Die beschriebenen Mischungen weisen eine zufriedenstellende Lagerstabilität auf, jedoch ist die Haftung der erhaltenen Beschichtungen auf Oberflächen zu gering.

Aus WO 2005/057286 sind $\alpha$-(1'-Hydroxyalkyl)acrylate bekannt, die durch die Reaktion von Di- oder Polyacrylaten mit Aldehyden oder Di- oder Polyaldehyden mit Monoacrylaten erhalten werden. Dieser Reaktionstyp ist auch bekannt als Baylis-Hillman-Reaktion. Diese Produkte sind durch Strahlungshärtung oder durch Reaktion mit Isocyanaten in einer Dual-Cure-Reaktion härtbar.

Die WO 2014/152850 beschreibt hochfunktionalisierte Polymere, hergestellt aus Baylis-Hillman Addukten.

Aus WO 2011/141424 sind Hydroxygruppen und Acrylatgruppen aufweisende verzweigte Polymere (S) mit $\alpha$-(1'-Hydroxyalkyl)acrylatgruppen, bekannt, die erhältlich sind durch Reaktion mindestens einer Carbonylverbindung (A), ausgewählt aus der Gruppe bestehend aus

- Carbonylverbindungen (Ax) mit mehr als zwei Carbonylgruppen und,

- Dicarbonylverbindungen (A2) mit genau zwei Carbonylgruppen, wobei die Carbonylgruppen sowohl in (A2) als auch in (Ax) jeweils unabhängig voneinander ausgewählt sind aus der Gruppe bestehend aus
- Aldehydgruppen und
- Ketogruppen

und
mit mindestens einer Acrylatverbindung (B), ausgewählt aus der Gruppe bestehend aus

- Acrylatverbindungen (By) mit mehr als zwei Acrylatgruppen und
- Diacrylatverbindungen (B2),

mit der Maßgabe, dass die mittlere Funktionalität der Carbonylgruppen-enthaltenden Verbindungen (A) und/oder die mittlere Funktionalität der Acrylatgruppen-enthaltenden Verbindungen (B) mehr als 2 beträgt. Ebenfalls offenbart wird die Härtung derartiger Polymere durch Strahlungs- oder Dual-Cure-Härtung.

Aufgabe der vorliegenden Erfindung war es, ein geeignetes System (insbesondere für Spritzpressverfahren wie z.B. RTM-Verfahren) mit steilerem Aushärteprofil zu finden, d.h. mit einer relativ hohen Temperaturabhängigkeit der Aushärtegeschwindigkeit, welches idealerweise bei Raumtemperatur nicht oder nur sehr langsam aushärtet und eine möglichst lange Topfzeit aufweist, und welches bei moderater Temperaturerhöhung möglichst schnell aushärtet. Außerdem sollte die Formulierung möglichst frei sein von Bisphenol A, aber dennoch vergleichbare Leistungen zeigen wie bekannte Epoxy-Systeme in RTM-Verfahren.

Die Aufgabe wurde gelöst durch ein Verfahren zur Härtung von härtbaren Zusammensetzungen, wobei

- mindestens eine durch Erwärmung härtbare Zusammensetzung zur Verfügung gestellt wird und
- durch Erwärmen auf Temperaturen von größer oder gleich 60 °C eine Aushärtung der Zusammensetzung bewirkt wird,

wobei die härtbare Zusammensetzung mindestens folgende Bestandteile enthält

(a) mindestens ein Polymer (S) erhältlich durch Reaktion mindestens einer Verbindung mit zwei Aldehydgruppen und mindestens einer Acrylatverbindung (B), ausgewählt aus der Gruppe bestehend aus Acrylatverbindungen mit mehr als zwei Acrylatgruppen (By) und Diacrylatverbindungen (B2),
wobei die mindestens eine Verbindung mit zwei Aldehydgruppen ein aromatischer Dialdehyd ist mit auf die Bindungen der beiden Aldehydgruppen bezogener gewinkelter Molekülstruktur,
(b) optional mindestens eine nicht-polymere Verbindung (S1) mit einer $\alpha$-(1'-Hydroxyalkyl)-acrylatgruppe oder mindestens eine nicht-polymere Verbindung (S2) mit zwei oder mehr $\alpha$-(1'-Hydroxyalkyl)acrylatgruppen,
(c) mindestens eine Verbindung (C), die mindestens zwei Thiolgruppen trägt,
(d) optional mindestens einen Reaktivverdünner (D) mit einem zahlenmittleren Molekulargewicht $M_n$ von vorzugsweise weniger als 1000 g/mol, der vorzugsweise mindestens zwei (Meth)Acrylatgruppen aufweist,
(e) optional mindestens einen Katalysator (E), der die Anlagerung von Thiolgruppen an Acrylatgruppen zu beschleunigen vermag, und
(f) optional mindestens einen Photoinitiator (F).

Das Polymer (S) kann außer aus dem aromatischen Dialdehyd mit auf die Bindungen der beiden Aldehydgruppen bezogener gewinkelter Molekülstruktur auch aus einer oder mehreren weiteren, davon verschiedenen Verbindungen mit ein, zwei oder mehr Aldehydgruppen hergestellt sein.

Die Verbindungen (S1) und (S2) sind im Vergleich zu den Polymeren (S) in der Regel keine Polymere.

Raumtemperatur bedeutet 23°C, sofern nicht explizit etwas anderes angegeben ist. Die härtbare Zusammensetzung ist vorzugsweise latent reaktiv, d.h. bei Raumtemperatur nicht aushärtend. Eine latent reaktive, bei Raumtemperatur nicht aushärtende Zusammensetzung ist eine Zusammensetzung, die bei Raumtemperatur innerhalb von 4 h eine Viskositätserhöhung von weniger als 100 000 mPa s, vorzugsweise weniger als 10 000 mPa s, besonders bevorzugt von weniger als 5000 mPa s zeigt. Die Viskosität kann bestimmt werden mit einem Kegel-Platte-Rotationsviskosimeter (z.B. Rheometer "MCR 301" von Anton Paar, Messaufbau CP25-1-SN12203) bei 23°C, konstante Scherrate 1 $s^{-1}$, Spaltbreite d = 0,05 mm.

Die latent reaktive Zusammensetzung härtet dabei vorzugsweise innerhalb von 16 Stunden bei Raumtemperatur nicht klebfrei durch, hat also nach 16 Stunden immer noch zumindest eine Restklebrigkeit. Die Klebfreiheit kann mit folgender Labormethode getestet werden:
Nach Mischen der Reaktivkomponenten wird jeweils nach einem vorher definierten Zeitraum (je nach Reaktivität der Komponenten können es einige Sekunden, Minuten oder Stunden sein) mit einem Holzstäbchen (Schaschlikstab) in

das Harz gestochen. Wenn nach dem Herausziehen des Stäbchens kein Harz mehr am Holz kleben bleibt, ist die Mischung klebfrei ausgehärtet.

Die reaktive bzw. latent reaktive Zusammensetzung härtet jedoch bei Temperaturerhöhung vorzugsweise innerhalb von wenigen Minuten (z.B. innerhalb von 60 Minuten bei 70 °C, vorzugsweise innerhalb von 5 Minuten bei 60 °C) klebfrei aus, hat also keine spürbare Klebrigkeit mehr.

Aufgrund des stufenförmigen Aushärtungsprofils werden kürzere Produktionszyklen bei der Herstellung von Kompositmaterialien (z.B. für Windenergieanlagen) oder beim Kleben (z.B. im Automobilbau) ermöglicht.

Die härtbare Zusammensetzung enthält mindestens ein Polymer (S), welches erhältlich ist durch Reaktion mindestens einer Verbindung mit zwei oder mehr Aldehydgruppen und mindestens einer Acrylatverbindung (B), ausgewählt aus der Gruppe bestehend aus Acrylatverbindungen mit mehr als zwei Acrylatgruppen (By) und Diacrylatverbindungen (B2).

Die Menge von Polymer (S) in der härtbaren Zusammensetzung beträgt vorzugsweise von 10 bis 80 Gew.% oder von 20 bis 75 Gew.% oder von 20 bis 70 Gew.%, oder von 40 bis 75 Gew.% oder von 40 bis 60 Gew.%.

Die Menge an optionalen nicht-polymeren Verbindungen (S1) mit einer $\alpha$-(1'-Hydroxyalkyl)-acrylatgruppe und optionalen nicht-polymeren Verbindungen (S2) mit zwei oder mehr $\alpha$-(1'-Hydroxyalkyl)acrylatgruppen in der härtbaren Zusammensetzung beträgt insgesamt z.B. von 0 bis 80 Gew.% oder von 10 bis 80 Gew.%, oder von 10 bis 60 Gew.% oder von 20 bis 70 Gew.%, besonders bevorzugt von 40 bis 60 Gew.%.

Unter den optionalen Verbindungen (S1) und (S2), die $\alpha$-(1'-Hydroxyalkyl)acrylatgruppen tragen, wird unterschieden zwischen solchen Verbindungen (S1), die genau eine $\alpha$-(1'-Hydroxyalkyl)acrylatgruppe tragen, also durch Reaktion eines Monoacrylats mit einer Monocarbonylverbindung erhältlich sind (siehe unten) und Verbindungen (S2) mit zwei $\alpha$-(1'-Hydroxyalkyl)acrylatgruppen, erhältlich durch Reaktion eines Di- oder höherfunktionellen Acrylats mit Monocarbonylverbindungen bzw. durch Reaktion von Verbindungen mit genau einer Acrylatgruppe und Verbindungen mit mindestens zwei Carbonylgruppen (siehe unten). Die Verbindungen (S1) fungieren dabei als niedermolekulare Monomere in der härtbaren Zusammensetzung, die zum gewünschten Molekulargewichtsaufbau und damit zur Verminderung der Flüchtigkeit der Einzelkomponenten im System, aber nicht zur Vernetzung beitragen, wohingegen (S2) und (S) durch ihre Funktionalität von mindestens 2 bezogen auf aktivierte Doppelbindungen zu einer Vernetzung der härtbaren Zusammensetzung führen.

Das Polymer (S) ist durch sogenannte Baylis-Hillman-Reaktion in Gegenwart eines geeigneten Katalysators aus der Aldehydverbindung und der Acrylatverbindung (B) herstellbar und enthält vorzugsweise drei oder mehr $\alpha$-(1'-Hydroxyalkyl)acrylatgruppen, beispielsweise 3 bis 10, oder 3 bis 6, oder 3 bis 4 $\alpha$-(1'-Hydroxyalkyl)acrylatgruppen. Es kann sich auch um ein Gemisch von Verbindungen handeln, die dann im statistischen Mittel die geforderte Funktionalität aufweisen. Die mittlere Funktionalität von Polymer (S) und Verbindungen S1 und S2 bezüglich $\alpha$-(1'-Hydroxyalkyl)acrylatgruppen ist dabei größer 1, bevorzugt im Mittel zwischen 1,1 und 10, besonders bevorzugt zwischen 1,1 und 8, ganz besonders bevorzugt zwischen 1,3 und 8 und speziell zwischen 1,3 und 6.

Das zahlenmittlere Molekulargewicht $M_n$ von Polymer (S), bestimmt durch Gelpermeationschromatographie mit Tetrahydrofuran als Elutionsmittel und Polymethylmethacrylat (PMMA) als Standard, kann beispielsweise bis zu 5000, bevorzugt von 200 bis zu 3000, besonders bevorzugt zwischen 250 und 2000 und insbesondere zwischen 300 und 1500 g/mol betragen.

Die Polydispersität (Quotient aus zahlenmittlerem Molekulargewicht $M_n$ und gewichtsmittlerem Molekulargewicht $M_w$) der Polymeren (S) beträgt in der Regel von 1,1 bis 30, bevorzugt 1,2 bis 20, besonders bevorzugt 1,2 bis 15, ganz besonders bevorzugt bis 10. Speziell kann die Polydispersität bis 5 und sogar bis 3 betragen. Die Methode zur Bestimmung der Polydispersität ist im Analytiker Taschenbuch Bd. 4, Seiten 433 bis 442 , Berlin 1984 beschrieben.

Beispiele für solche $\alpha$-(1'-Hydroxyalkyl)acrylate (S), (S1) und (S2) sind Verbindungen, die erhältlich sind durch Umsetzung eines ein- oder mehrfunktionellen Acrylats mit einer ein- oder mehrfunktionellen Carbonylverbindung. Beispiele für Carbonylverbindungen sind Aldehyde oder Ketone, bevorzugt Aldehyde.

Die Verbindungen (S1) sind erhältlich durch Umsetzung eines monofunktionellen Acrylats (I) mit einer monofunktionellen Carbonylverbindung (II).

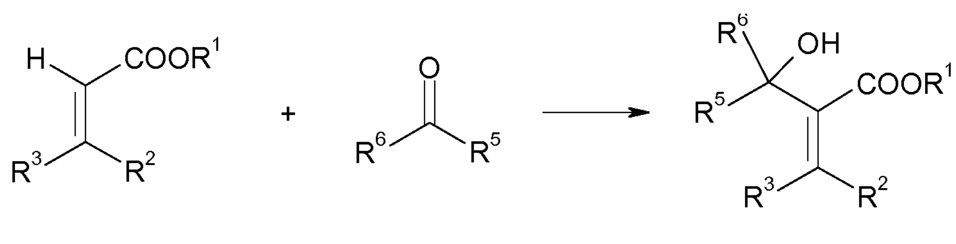

(I) (II) (III)

Die Verbindungen (S2) sind erhältlich durch Umsetzung eines di- oder höherfunktionellen Acrylats (IV) mit einer monofunktionellen Carbonylverbindung (II).

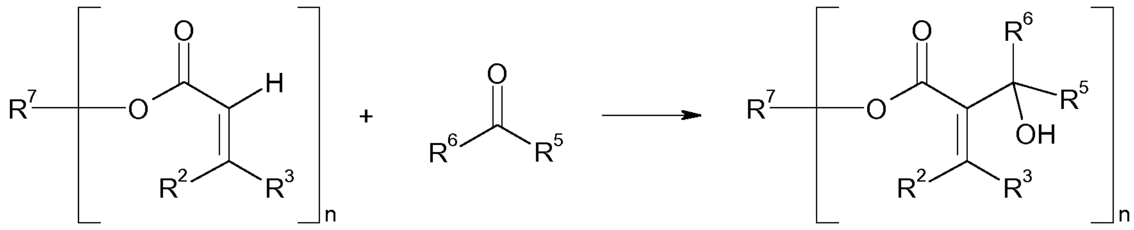

(IV) (II) (V)

Weitere Verbindungen (S2) sind erhältlich durch Umsetzung eines monofunktionellen Acrylats (I) mit einer di- oder höherfunktionellen Carbonylverbindung (VI).

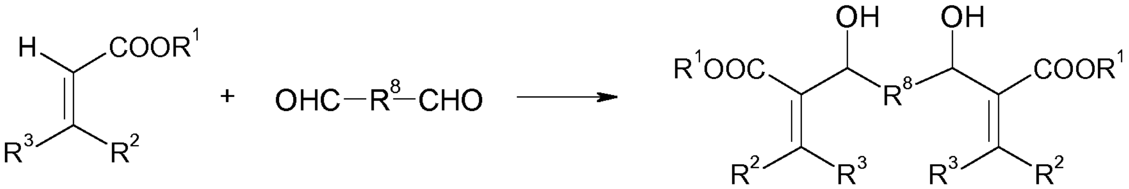

(I) (VI) (VII)

Darin bedeuten

R1, $R^2$ und $R^3$ unabhängig voneinander $C_1$ - $C_{18}$-Alkyl, gegebenenfalls durch ein oder mehrere Sauerstoff- und/oder Schwefelatome und/oder ein oder mehrere substituierte oder unsubstituierte Iminogruppen unterbrochenes $C_2$ - $C_{18}$-Alkyl, $C_2$ - $C_{18}$-Alkenyl, $C_6$ - $C_{12}$-Aryl, $C_5$ - $C_{12}$-Cycloalkyl oder einen fünf- bis sechsgliedrigen, Sauerstoff-, Stickstoff- und/oder Schwefelatome aufweisenden Heterocyclus, wobei die genannten Reste jeweils durch Aryl, Alkyl, Aryloxy, Alkyloxy, Heteroatome und/oder Heterocyclen substituiert sein können,

$R^2$ und/oder $R^3$ zusätzlich Wasserstoff, gegebenenfalls durch Aryl, Alkyl, Aryloxy, Alkyloxy, Heteroatome und/oder Heterocyclen substituiertes $C_1$ - $C_{18}$-Alkoxy oder -$COOR^4$,

$R^2$ kann zusätzlich zusammen mit $R^1$ einen Ring bilden, in diesem Fall kann $R^2$ eine Carbonylgruppe bedeuten, so dass die Gruppe $COOR^1$ und $R^2$ gemeinsam eine Säureanhydridgruppe -(CO)-O-(CO)- bilden,

$R^4$ hat die gleiche Bedeutung wie für $R^1$ aufgeführt, kann jedoch von diesem verschieden sein, $R^5$ und $R^6$ unabhängig voneinander Wasserstoff, $C_1$ - $C_{18}$-Alkyl, gegebenenfalls durch ein oder mehrere Sauerstoff- und/oder Schwefelatome und/oder ein oder mehrere substituierte oder unsubstituierte Iminogruppen unterbrochenes $C_2$ - $C_{18}$-Alkyl, $C_2$ - $C_{18}$-Alkenyl, $C_6$ - $C_{12}$-Aryl, $C_5$ - $C_{12}$-Cycloalkyl oder einen fünf- bis sechsgliedrigen, Sauerstoff-, Stickstoff- und/oder Schwefelatome aufweisenden Heterocyclus, wobei die genannten Reste jeweils durch Aryl, Alkyl, Aryloxy, Alkyloxy, Heteroatome und/oder Heterocyclen substituiert sein können, oder können gemeinsam einen Ring bilden,

n eine positive ganze Zahl von 2 bis 10,

$R^7$ einen n-wertigen organischen Rest mit 1 bis 50 Kohlenstoffatomen, der unsubstituiert oder mit Halogen, $C_1$-$C_8$-Alkyl, $C_2$-$C_8$-Alkenyl, Carboxy, Carboxy-$C_1$-$C_8$-Alkyl, $C_1$-$C_{20}$-Acyl, $C_1$-$C_8$-Alkoxy, $C_6$-$C_{12}$-Aryl, Hydroxy oder hydroxysubstituiertem $C_1$-$C_8$-Alkyl substituiert sein und/oder eine oder mehrere -(CO)-, -O(CO)O-, -(NH)(CO)O-, -O(CO)(NH)-, -O(CO)- oder -(CO)O-Gruppen aufweisen kann und

$R^8$ bedeutet unsubstituiertes oder mit Halogen, $C_1$-$C_8$-Alkyl, $C_2$-$C_8$-Alkenyl, Carboxy, Carboxy-$C_1$-$C_8$-Alkyl, $C_1$-$C_{20}$-Acyl, $C_1$-$C_8$-Alkoxy, $C_6$-$C_{12}$-Aryl, Hydroxyl oder hydroxysubstituiertem $C_1$-$C_8$-Alkyl substituiertes $C_6$-$C_{12}$-Arylen, $C_3$-$C_{12}$-Cycloalkylen, $C_1$-$C_{20}$-Alkylen oder durch ein- oder mehrere Sauerstoff- und/oder Schwefelatome und/oder ein oder mehrere substituierte oder unsubstituierte Iminogruppen und/oder durch eine oder mehrere -(CO)-, -O(CO)O-, -(NH)(CO)O-, -O(CO)(NH)-, -O(CO)- oder -(CO)O-Gruppen unterbrochenes $C_2$-$C_{20}$-Alkylen oder eine Einfachbindung.

Darin bedeuten

gegebenenfalls durch Aryl, Alkyl, Aryloxy, Alkyloxy, Heteroatome und/oder Heterocyclen substituiertes $C_1$ - $C_{18}$-Alkyl beispielsweise Methyl, Ethyl, Propyl, Isopropyl, n-Butyl, sec-Butyl, tert.-Butyl, Pentyl, Hexyl, Heptyl, Octyl, 2-Etylhexyl, 2,4,4-Trimethylpentyl, Decyl, Dodecyl, Tetradecyl, Hetadecyl, Octadecyl, 1,1-Dimethylpropyl, 1,1-Dimethylbutyl, 1,1,3,3-Tetramethylbutyl, Benzyl, 1-Phenylethyl, 2-Phenylethyl, $\alpha,\alpha$-Dimethylbenzyl, Benzhydryl, p-Tolylmethyl,1-(p-Butylphenyl)-ethyl, p-Chlorbenzyl, 2,4-Dichlorbenzyl, p-Methoxybenzyl, m-Ethoxybenzyl, 2-Cyanoethyl, 2-Cyanopropyl, 2-Methoxycarbonethyl, 2-Ethoxycarbonylethyl, 2-Butoxycarbonylpropyl, 1,2-Di-(methoxycarbonyl)-ethyl, 2-Methoxyethyl, 2-Ethoxyethyl, 2-Butoxyethyl, Diethoxymethyl, Diethoxyethyl, 1,3-Dioxolan-2-yl, 1,3-Dioxan-2-yl, 2-Methyl-1,3-dioxolan-2-yl, 4-Methyl-1,3-dioxolan-2-yl, 2-Isopropoxyethyl, 2-Butoxypropyl, 2-Octyloxyethyl, Chlormethyl, 2-Chlorethyl, Trichlormethyl, Trifluormethyl, 1,1-Dimethyl-2-chlorethyl, 2-Methoxyisopropyl, 2-Ethoxyethyl, Butylthiomethyl, 2-Dodecylthioethyl, 2-Phenylthioethyl, 2,2,2-Trifluorethyl, 2-Hydroxyethyl, 2-Hydroxypropyl, 3-Hydroxypropyl, 4-Hydroxybutyl, 6-Hydroxyhexyl, 2-Aminoethyl, 2-Aminopropyl, 3-Aminopropyl, 4-Aminobutyl, 6-Aminohexyl, 2-Methylaminoethyl, 2-Methylaminopropyl, 3-Methylaminopropyl, 4-Methylaminobutyl, 6-Methylaminohexyl, 2-Dimethylaminoethyl, 2-Dimethylaminopropyl, 3-Dimethylaminopropyl, 4-Dimethylaminobutyl, 6-Dimethylaminohexyl, 2-Hydroxy-2,2-dimethylethyl, 2-Phenoxyethyl, 2-Phenoxypropyl, 3-Phenoxypropyl, 4-Phenoxybutyl, 6-Phenoxyhexyl, 2-Methoxyethyl, 2-Methoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl oder 6-Ethoxyhexyl,

gegebenenfalls durch Aryl, Alkyl, Aryloxy, Alkyloxy, Heteroatome und/oder Heterocyclen substituiertes $C_1$ - $C_{18}$-Alkoxy beispielsweise Methoxy, Ethoxy, n-Propyloxy, iso-Propyloxy, n-Butyloxy, iso-Butyloxy, sek.-Butyloxy, tert.-Butyloxy, 6-Hydroxy-1,4-dioxohexyl, 9-Hydroxy-1,4,7-tri-oxononyl, 12-Hydroxy-1,4,7,10-tetraoxododecyl, 6-Methoxy-1,4-dioxohexyl, 9-Methoxy-1,4,7-tri-oxononyl, 12-Methoxy-1,4,7,10-tetraoxododecyl, 6-Ethoxy-1,4-dioxohexyl, 9-Ethoxy-1,4,7-trioxononyl, 12-Ethoxy-1,4,7,10-tetraoxododecyl, 8-Hydroxy-1,5-dioxooctyl, 12-Hydroxy-1,5,9-tri-oxooctyl, 16-Hydroxy-1,5,9,13-tetraoxohexadecyl, 8-Methoxy-1,5-dioxooctyl, 12-Methoxy-1,5,9-trioxooctyl, 16-Methoxy-1,5,9,13-tetraoxohexadecyl, 8-Ethoxy-1,5-dioxooctyl, 12-Ethoxy-1,5,9-trioxooctyl, 16-Ethoxy-1,5,9,13-tetraoxohexadecyl, 10-Hydroxy-1,6-dioxodecyl, 15-Hydroxy-1,6,11-trioxopentadecyl, 10-Methoxy-1,6-dioxodecyl, 15-Methoxy-1,6,11-trioxopentadecyl, 10-Ethoxy-1,6-dioxodecyl oder 15-Ethoxy-1,6,11-trioxopentadecyl,

gegebenenfalls durch ein oder mehrere Sauerstoff- und/oder Schwefelatome und/oder ein oder mehrere substituierte oder unsubstituierte Iminogruppen unterbrochenes $C_2$ - $C_{18}$-Alkyl beispielsweise 5-Hydroxy-3-oxa-pentyl, 8-Hydroxy-3,6-dioxa-octyl, 11-Hydroxy-3,6,9-trioxa-undecyl, 7-Hydroxy-4-oxa-heptyl, 11-Hydroxy-4,8-dioxa-undecyl, 15-Hydroxy-4,8,12-trioxa-pentadecyl, 9-Hydroxy-5-oxa-nonyl, 14-Hydroxy-5,10-oxa-tetradecyl, 5-Methoxy-3-oxa-pentyl, 8-Methoxy-3,6-dioxa-octyl, 11-Methoxy-3,6,9-trioxa-undecyl, 7-Methoxy-4-oxa-heptyl, 11-Methoxy-4,8-dioxa-undecyl, 15-Methoxy-4,8,12-trioxa-pentadecyl, 9-Methoxy-5-oxa-nonyl, 14-Methoxy-5,10-oxa-tetradecyl, 5-Ethoxy-3-oxa-pentyl, 8-Ethoxy-3,6-dioxa-octyl, 11-Ethoxy-3,6,9-trioxa-undecyl, 7-Ethoxy-4-oxa-heptyl, 11-Ethoxy-4,8-dioxa-undecyl, 15-Ethoxy-4,8,12-trioxa-pentadecyl, 9-Ethoxy-5-oxa-nonyl oder 14-Ethoxy-5,10-oxa-tetradecyl.

Die Anzahl der Sauerstoff- und/oder Schwefelatome und/oder Iminogruppen ist nicht beschränkt. In der Regel beträgt sie nicht mehr als 5 in dem Rest, bevorzugt nicht mehr als 4 und ganz besonders bevorzugt nicht mehr als 3.

Weiterhin befinden sich zwischen zwei Heteroatomen in der Regel mindestens ein Kohlenstoffatom, bevorzugt mindestens zwei.

Substituierte und unsubstituierte Iminogruppen können beispielsweise Imino, Methylimino, *iso*-Propylimino, n-Butylimino oder *tert*-Butylimino sein.

Weiterhin bedeutet

gegebenenfalls durch Aryl, Alkyl, Aryloxy, Alkyloxy, Heteroatome und/oder Heterocyclen substituiertes $C_2$ - $C_{18}$-Alkenyl beispielsweise Vinyl, 1-Propenyl, Allyl, Methallyl, 1,1-Dimethylallyl, 2-Butenyl, 2-Hexenyl, Octenyl, Undecenyl, Dodecenyl, Octadecenyl, 2-Phenylvinyl, 2-Methoxyvinyl, 2-Ethoxyvinyl, 2-Methoxyallyl, 3-Methoxyallyl, 2-Ethoxyallyl, 3-Ethoxyallyl oder 1- oder 2-Chlorvinyl,

gegebenenfalls durch Aryl, Alkyl, Aryloxy, Alkyloxy, Heteroatome und/oder Heterocyclen substituiertes $C_6$ - $C_{12}$-Aryl beispielsweise Phenyl, Tolyl, Xylyl, $\alpha$-Naphthyl, $\beta$-Naphthyl, 4-Diphenylyl, Chlorphenyl, Dichlorphenyl, Trichlorphenyl, Difluorphenyl, Methylphenyl, Dimethylphenyl, Trimethylphenyl, Ethylphenyl, Diethylphenyl, iso-Propylphenyl, tert.-Butylphenyl, Dodecylphenyl, Methoxyphenyl, Dimethoxyphenyl, Ethoxyphenyl, Hexyloxyphenyl, Methylnaphthyl, Isopropylnaphthyl, Chlornaphthyl, Ethoxynaphthyl, 2,6-Dimethylphenyl, 2,4,6-Trimethylphenyl, 2,6-Dimethoxyphenyl, 2,6-Dichlorphenyl, 4-Bromphenyl, 2- oder 4-Nitrophenyl, 2,4- oder 2,6-Dinitrophenyl, 4-Dimethylaminophenyl, 4-Acetylphenyl, Methoxyethylphenyl oder Ethoxymethylphenyl,

gegebenenfalls durch Aryl, Alkyl, Aryloxy, Alkyloxy, Heteroatome und/oder Heterocyclen substituiertes $C_5$ - $C_{12}$-Cycloalkyl beispielsweise Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, Methoxycyclohexyl, Dimethoxycyclohexyl, Diethoxycyclohexyl, Butylthiocyclohexyl, Chlorcyclohexyl, Dichlorcyclohexyl, Dichlorcyclopentyl sowie ein gesättigtes oder ungesättigtes bicyclisches System wie z.B. Norbornyl oder Norbornenyl,

ein fünf- bis sechsgliedriger, Sauerstoff-, Stickstoff- und/oder Schwefelatome aufweisender Heterocyclus beispielsweise Furyl, Thiophenyl, Pyrryl, Pyridyl, Indolyl, Benzoxazolyl, Dioxolyl, Dioxyl, Benzimidazolyl, Benzthiazolyl, Dimethylpyridyl, Methylchinolyl, Dimethylpyrryl, Methoxyfuryl, Dimethoxypyridyl, Difluorpyridyl, Methylthiophenyl, Isopropylthiophenyl oder tert.-Butylthiophenyl und

$C_1$ bis $C_4$-Alkyl beispielsweise Methyl, Ethyl, Propyl, Isopropyl, n-Butyl, sec-Butyl oder tert.-Butyl.

Die Anzahl der Substituenten in den angegebenen Resten ist nicht beschränkt. In der Regel beträgt sie bei Resten mit ein bis drei Kohlenstoffatomen bis zu 3 Substituenten, bevorzugt bis zu 2 und besonders bevorzugt bis zu einem. Bei Resten mit vier bis sechs Kohlenstoffatomen beträgt sie in der Regel bis zu 4 Substituenten, bevorzugt bis zu 3 und besonders bevorzugt bis zu einem. Bei Resten mit mehr als sieben Kohlenstoffatomen beträgt sie in der Regel bis zu 6 Substituenten, bevorzugt bis zu 4 und besonders bevorzugt bis zu zwei.

$R^1$ ist bevorzugt durch Aryl, Alkyl, Aryloxy, Alkyloxy, Heteroatome und/oder Heterocyclen substituiertes $C_1$ - $C_{18}$-Alkyl oder $C_5$ - $C_{12}$-Cycloalkyl, beispielsweise Methyl, Ethyl, Propyl, Isopropyl, n-Butyl, sec-Butyl, tert.-Butyl, Pentyl, Hexyl, Heptyl, Octyl, 2-Ethylhexyl, 2-Hydroxyethyl, 2-Hydro-xypropyl, 3-Hydroxypropyl, 4-Hydroxybutyl, 6-Hydroxyhexyl, Cyclopentyl, Cyclohexyl, Cyclo-octyl, Cyclododecyl, Methylcyclopentyl, Dimethylcyclopentyl, Methylcyclohexyl, Dimethylcyclohexyl, Norbornyl oder Norbornenyl, besonders bevorzugt ist $R^1$ Methyl, Ethyl, Propyl, Isopropyl, n-Butyl, sec-Butyl, tert.-Butyl, Pentyl, Hexyl, Heptyl, Octyl, 2-Ethylhexyl, 2-Hydroxyethyl, 2-Hydro-xypropyl, 3-Hydroxypropyl, 4-Hydroxybutyl oder 6-Hydroxyhexyl, ganz besonders bevorzugt Methyl, Ethyl, Propyl, Isopropyl, n-Butyl, sec-Butyl, tert.-Butyl oder 2-Ethylhexyl und insbesondere Methyl, Ethyl, n-Butyl oder 2-Ethylhexyl.

$R^2$ ist bevorzugt Wasserstoff, durch Aryl, Alkyl, Aryloxy, Alkyloxy, Heteroatome und/oder Heterocyclen substituiertes $C_1$ - $C_{18}$-Alkyl oder eine Carbonylgruppe, die mit $R^1$ verbunden ist, so dass die Gruppe $COOR^1$ und $R^2$ gemeinsam eine Säureanhydridgruppe -(CO)-O-(CO)- bilden, besonders bevorzugt Wasserstoff, Methyl, Ethyl, Propyl, Isopropyl, n-Butyl, sec-Butyl oder tert.-Butyl, ganz besonders bevorzugt Wasserstoff oder Methyl und insbesondere Wasserstoff.

$R^3$ ist bevorzugt Wasserstoff, durch Aryl, Alkyl, Aryloxy, Alkyloxy, Heteroatome und/oder Heterocyclen substituiertes $C_1$ - $C_{18}$-Alkyl, besonders bevorzugt Wasserstoff, oder $C_1$-$C_4$-Alkyl, worunter im Rahmen dieser Schrift Methyl, Ethyl, Propyl, Isopropyl, n-Butyl, sec-Butyl oder tert.-Butyl verstanden wird, ganz besonders bevorzugt Wasserstoff oder Methyl und insbesondere Wasserstoff.

$R^4$ ist bevorzugt Methyl, Ethyl, Propyl, Isopropyl, n-Butyl, sec-Butyl oder tert.-Butyl, besonders bevorzugt Methyl oder Ethyl.

$R^5$ und $R^6$ sind unabhängig voneinander bevorzugt Wasserstoff, durch Aryl, Alkyl, Aryloxy, Alkyloxy, Heteroatome und/oder Heterocyclen substituiertes $C_1$ - $C_{18}$-Alkyl, $C_2$ - $C_{18}$-Alkenyl, $C_6$ - $C_{12}$-Aryl oder $C_5$ - $C_{12}$-Cycloalkyl, besonders bevorzugt Wasserstoff, durch Aryl, Alkyl, Aryloxy, Alkyloxy, Heteroatome und/oder Heterocyclen substituiertes $C_1$ - $C_{18}$-Alkyl oder $C_6$ - $C_{12}$-Aryl, ganz besonders bevorzugt Wasserstoff, Methyl, Ethyl, Propyl, Isopropyl, n-Butyl, sec-Butyl, tert.-Butyl, Phenyl, Benzyl, Tolyl, o-, m- oder p-Xylyl, 2-, 3- oder 4-Methoxyphenyl, 2-, 3- oder 4-Chlorphenyl oder 2-, 3- oder 4-Nitrophenyl und insbesondere Wasserstoff, Methyl, Ethyl, Propyl, Isopropyl oder Phenyl.

Bevorzugt ist mindestens einer der beiden Reste $R^5$ und $R^6$ Wasserstoff.

$R^7$ ist bevorzugt ein organischer Rest, abgeleitet von einem n-wertigen Alkohol durch Entfernung von n Hydroxygruppen, beispielsweise abgeleitet von zwei- bis zehnwertigen Alkoholen, besonders bevorzugt abgeleitet von zwei- bis sechswertigen Alkoholen, ganz besonders bevorzugt abgeleitet von zwei- bis vierwertigen Alkoholen und insbesondere abgeleitet von zwei- bis dreiwertigen Alkoholen.

$R^8$ ist bevorzugt bedeutet unsubstituiertes oder mit Halogen, $C_1$-$C_8$-Alkyl, $C_2$-$C_8$-Alkenyl, Carboxy, Carboxy-$C_1$-$C_8$-Alkyl, $C_1$-$C_{20}$-Acyl, $C_1$-$C_8$-Alkoxy, $C_6$-$C_{12}$-Aryl, Hydroxyl oder hydroxysubstituiertem $C_1$-$C_8$-Alkyl substituiertes $C_6$-$C_{12}$-Arylen, $C_3$-$C_{12}$-Cycloalkylen oder $C_1$-$C_{20}$-Alkylen oder durch ein- oder mehrere Sauerstoff- und/oder Schwefelatome und/oder ein oder mehrere substituierte oder unsubstituierte Iminogruppen und/oder durch eine oder mehrere -(CO)-, -O(CO)O-, -(NH)(CO)O-, -O(CO)(NH)-, -O(CO)- oder -(CO)O-Gruppen unterbrochenes $C_2$-$C_{20}$-Alkylen oder eine Einfachbindung, besonders bevorzugt unsubstituiertes oder mit Halogen, $C_1$-$C_8$-Alkyl, $C_2$-$C_3$-Alkenyl, Carboxy, Carboxy-$C_1$-$C_8$-Alkyl, $C_1$-$C_{20}$-Acyl, $C_1$-$C_8$-Alkoxy, $C_6$-$C_{12}$-Aryl, Hydroxyl oder hydroxysubstituiertem $C_1$-$C_8$-Alkyl substituiertes $C_1$-$C_{20}$-Alkylen oder eine Einfachbindung und ganz besonders bevorzugt unsubstituiertes oder mit Halogen, $C_1$-$C_8$-Alkyl, $C_2$-$C_8$-Alkenyl, Carboxy, Carboxy-$C_1$-$C_8$-Alkyl, $C_1$-$C_{20}$-Acyl, $C_1$-$C_8$-Alkoxy, $C_6$-$C_{12}$-Aryl, Hydroxyl oder hydroxysubstituiertem $C_1$-$C_8$-Alkyl substituiertes $C_1$-$C_{20}$-Alkylen.

Beispiele für Verbindungen (I) sind Acrylsäuremethylester, Acrylsäureethylester, Acrylsäure-n-propylester, Acrylsäure-iso-propylester, Acrylsäure-n-butylester, Acrylsäure-sek-butylester, Acrylsäure-tert-butylester, Acrylsäure-2-ethylhexylester, 2-Hydroxyethylacrylat, 5-Hydroxy-3-oxa-pentylacrylat, 2-Hydroxypropylacrylat, 3-Hydroxypropylacrylat, 4-Hydroxybutylacrylat, 6-Hydroxyhexylacrylat, Dihydrodicyclopentadienylacrylat, Norbornylacrylat, Cyclohexylacrylat, Cyclopentylacrylat, Cyclododecylacrylat, Phenylacrylat, Crotonsäuremethylester, Crotonsäureethylester, Maleinsäureanhydrid, Maleinsäuredimethylester, Maleinsäurediethylester, Maleinsäuredi-n-butylester, Fumarsäuredimethylester oder Fumarsäurediethylester.

Bevorzugte Verbindungen (I) sind Acrylsäuremethylester, Acrylsäureethylester, Acrylsäure-n-propylester, Acrylsäure-iso-propylester, Acrylsäure-n-butylester, Acrylsäure-sek-butylester, Acrylsäure-tert-butylester und Acrylsäure-2-ethylhexylester.

Besonders bevorzugte Verbindungen (I) sind Acrylsäuremethylester, Acrylsäureethylester, Acrylsäure-n-butylester und Acrylsäure-2-ethylhexylester.

Beispiele für Verbindungen (II) sind Formaldehyd, Acetaldehyd, Propionaldehyd, n-Butyraldehyd, iso-Butyraldehyd, Heptanal, Nonanal, Cyclopentylaldehyd, Cyclohexylaldehyd, Benzaldehyd, 3-Chlorbenzaldehyd, 4-Chlorbenzaldehyd, 3-Hydroxybenzaldehyd, 4-Hydroxybenzaldehyd, 3-Methoxybenzaldehyd, 4-Methylbenzaldehyd, Phenylacetaldehyd, Salicylaldehyd, Chloralhydrat, 4-Dimethylaminobenzaldehyd, Furfural, 2-Nitrobenzaldehyd, Vanillin, Anisaldehyd, Zimtaldehyd, Pyridincarbaldehyd, Hydroxypivalinaldehyd, Dimethylolpropionaldehyd, Dimethylolbutyraldehyd, Trimethylolacetaldehyd, Aceton, Ethylmethylketon, Diethylketon, Methylvinylketon, iso-Butylmethylketon, Acetophenon, Propiophenon, Benzophenon, Cyclopentanon, Cyclohexanon oder Cyclododecanon.

Bevorzugte Verbindungen (II) sind die aufgelisteten Aldehyde, besonders bevorzugt sind Formaldehyd, Acetaldehyd, Propionaldehyd, n-Butyraldehyd, iso-Butyraldehyd, Benzaldehyd, 3-Hydroxybenzaldehyd, 4-Hydroxybenzaldehyd, Hydroxypivalinaldehyd, Dimethylolpropionaldehyd, Dimethylolbutyraldehyd und Trimethylolacetaldehyd, ganz besonders bevorzugt sind Formaldehyd, Acetaldehyd, Propionaldehyd, n-Butyraldehyd, iso-Butyraldehyd, 3-Hydroxybenzaldehyd, 4-Hydroxybenzaldehyd, Benzaldehyd und Dimethylolbutyraldehyd und insbesondere Formaldehyd und Acetaldehyd.

Es stellt eine bevorzugte Ausführungsform der vorliegenden Erfindung dar, als Verbindung (II) einen aromatischen Aldehyd einzusetzen, besonders bevorzugt Benzaldehyd, 3-Hydroxybenzaldehyd und 4-Hydroxybenzaldehyd und ganz besonders bevorzugt Benzaldehyd. Diese Ausführungsform ist insbesondere dann bevorzugt, wenn die erfindungsgemäßen Beschichtungsmassen für Klebstoffe eingesetzt werden sollen.

Es ist zur Herstellung nicht-etherverbrückter Baylis-Hillman-Produkte vorteilhaft Aldehyde in freier Form einzusetzen, d.h. die Bildung von Formalen dieser Aldehyde der Formel $(R^5\text{-CHO})_w$, worin w eine positive ganze Zahl ist, durch Einsatz geeigneter Aldehyde bzw. Wahl geeigneter Lösungsmittel zurückzudrängen. Während in US 5,380,901 aufgrund des Einsatzes von paraFormaldehyd bzw. para-Formaldehyd/DMSO, in dem die Bildung von Formalen nicht unterdrückt ist, durchweg etherverbrückte Systeme erhalten werden, ist es vorteilhaft Aldehyde mit einem hohen Anteil niedriger Formale einzusetzen, beispielsweise $w \leq 20$, bevorzugt $w \leq 10$ und besonders bevorzugt $w \leq 5$.

Der Anteil dieser niedrigen Formale sollte bezogen auf die Gesamtmenge Aldehyd beispielsweise mindestens 50 % betragen, bevorzugt mindestens 60 %, besonders bevorzugt mindestens 70 % und ganz besonders bevorzugt mindestens 80 %.

Dies wird im Fall von Formaldehyd beispielsweise dadurch erreicht, dass man Formaldehyd in Form von wässrigen Lösungen einsetzt, beispielsweise nicht mehr als 49 %ig und bevorzugt bis zu 37 %ig.

Durch diese Maßnahmen ist es möglich, den Anteil etherverbrückter Baylis-Hillman Produkte zurückzudrängen. Dieser Anteil wird bestimmt als molarer Anteil der Aldehyd-Äquivalente in Etherverbrückungen ($-CHR^5\text{-O-}CHR^5-$) an der Summe der Baylis-Hillman Produkte, also Etherverbrückungen und endständige $-CHR^5OH$-Gruppen.

Die Etherverbrückungen entsprechen somit 2 Moläquivalenten Aldehyd $R^5$-CHO, wohingegen die endständigen $-CHR^5OH$-Gruppen einem Moläquivalent Aldehyd entsprechen.

Die Bestimmung der Anteile der Gruppen kann beispielsweise über NMR-Spektroskopie erfolgen. Im Fall von Formaldehyd erscheint in $^1H$-NMR-Spektren in $CDCl_3$ die $CH_2\text{-O-}CH_2$-Gruppe als Singulett bzw. durch Allylkopplung aufgespaltenes Singulett bei ca. $\delta$=4,22 ppm (s. US 5,380,901) und die $CH_2OH$-Gruppe bei ca. 4,30 ppm oder in $^{13}C$-NMR-Spektren in $CDCl_3$ die $CH_2\text{-O-}CH_2$-Gruppe bei ca. $\delta$=68,7 ppm und die $CH_2OH$-Gruppe bei ca. 62,0 ppm.

Durch die oben beschriebenen erfindungsgemäßen Maßnahmen des Einsetzens von Aldehyden mit einem geringen Anteil an Formalen kann der Anteil der Etherverbrückungen in der Regel auf 50% oder weniger, bevorzugt auf 40% oder weniger, besonders bevorzugt auf nicht mehr als 33%, ganz besonders bevorzugt auf nicht mehr als 25% und insbesondere auf nicht mehr als 15% gesenkt werden.

Dahingegen beträgt der Anteil an Etherverbrückungen in dem in US 5,380,901 Spalte 5 dargestellten Silikondiacrylat mit n=2 und 95% x=$-CH_2OH$ (US 5,380,901, Spalte 5, Zeile 57-59) etwa 69%. Ein hoher Anteil endständiger OH-Gruppen ist jedoch in der Dual-Cure-Härtung für die Reaktion mit gegenüber OH reaktiven Gruppen vorteilhaft.

Beispiele für Verbindungen (IV) sind Ethylenglykoldiacrylat, 1,2-Propandioldiacrylat, 1,3-Propandioldiacrylat, 1,4-Butandioldiacrylat, 1,3-Butandioldiacrylat, 1,5-Pentandioldiacrylat, 1,6-Hexandioldiacrylat, 1,8-Octandioldiacrylat, Neopentylglykoldiacrylat, 1,1-, 1,2-, 1,3-und 1,4-Cyclohexandimethanoldiacrylat, 1,2-, 1,3- oder 1,4-Cyclohexandioldiacrylat, Trimethylolpropantriacrylat, Ditrimethylolpropanpenta- oder -hexaacrylat, Pentaerythrittri- oder -tetraacrylat, Glycerindi- oder -triacrylat, sowie Di- und Polyacrylate von Zuckeralkoholen, wie beispielsweise Sorbit, Mannit, Diglycerol, Threit, Erythrit, Adonit (Ribit), Arabit (Lyxit), Xylit, Dulcit (Galactit), Maltit oder Isomalt, oder von Polyesterpolyolen, Polyetherolen, Poly-THF mit einer Molmasse zwischen 162 und 2000 g/mol, Poly-1,3-Propandiol mit einer Molmasse zwischen 134 und 1178 g/mol, Polyethylenglykol mit einer Molmasse zwischen 106 und 898 g/mol, sowie Urethanacrylate oder Polycarbonatacrylate.

Weitere Beispiele sind Acrylate von Verbindungen der Formel (IVa) bis (IVc),

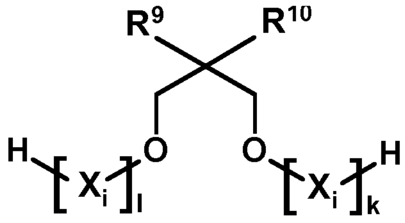

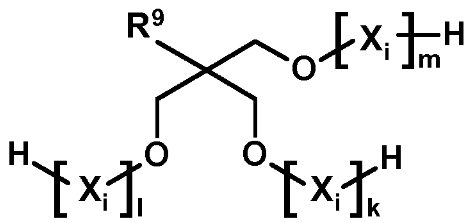

(IVa) (IVb)

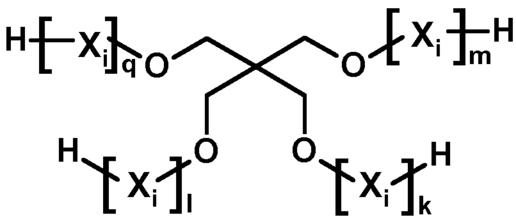

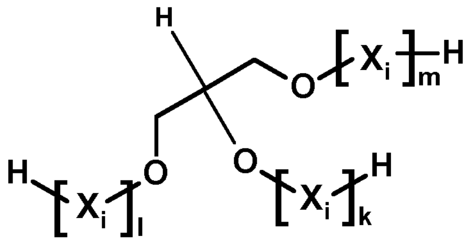

(IVc) (IVd)

worin

$R^9$ und $R^{10}$ unabhängig voneinander Wasserstoff oder $C_1$ - $C_{18}$-Alkyl,
k, l, m, q unabhängig voneinander je für eine ganze Zahl von 1 bis 10, bevorzugt 1 bis 5 und besonders bevorzugt 1 bis 3 stehen und
jedes $X_i$ für i = 1 bis k, 1 bis l, 1 bis m und 1 bis q unabhängig voneinander ausgewählt sein kann aus der Gruppe $-CH_2-CH_2-O-$, $-CH_2-CH(CH_3)-O-$, $-CH(CH_3)-CH_2-O-$, $-CH_2-C(CH_3)_2-O-$, $-C(CH_3)_2-CH_2-O-$, $-CH_2-CHVin-O-$, $-CHVin-CH_2-O-$, $-CH_2-CHPh-O-$ und $-CHPh-CH_2-O-$, bevorzugt aus der Gruppe $-CH_2-CH_2-O-$, $-CH_2-CH(CH_3)-O-$ und $-CH(CH_3)-CH_2-O-$, und besonders bevorzugt $-CH_2-CH_2-O-$,
worin Ph für Phenyl und Vin für Vinyl steht.

Bevorzugt handelt es sich dabei um Acrylate von ein- bis zwanzigfach und besonders bevorzugt drei- bis zehnfach ethoxyliertem, propoxyliertem oder gemischt ethoxyliertem und propoxyliertem und insbesondere ausschließlich ethoxyliertem Neopentylglykol, Glycerin, Trimethylolpropan, Trimethylolethan, Trimethylolmethan oder Pentaerythrit.

Bevorzugte Verbindungen (IV) sind Ethylenglykoldiacrylat, 1,2-Propandioldiacrylat, 1,3-Propandioldiacrylat, 1,4-Butandioldiacrylat, 1,6-Hexandioldiacrylat, Trimethylolpropantriacrylat, Pentaerythrittetraacrylat, Polyesterpolyolacrylate, Polyetherolacrylate und Triacrylat von ein- bis zwanzigfach ethoxyliertem Trimethylolpropan sowie Tetraacrylat von ein- bis zwanzigfach ethoxyliertem Pentaerythrit.

Besonders bevorzugte Verbindungen sind 1,4-Butandioldiacrylat, 1,6-Hexandioldiacrylat, Trimethylolpropantriacrylat, Pentaerythrittetraacrylat und Triacrylat von ein- bis zwanzigfach ethoxyliertem Trimethylolpropan sowie Tetraacrylat von ein- bis zwanzigfach ethoxyliertem Pentaerythrit.

Polyesterpolyole, sind z.B. aus Ullmanns Enzyklopädie der technischen Chemie, 4. Auflage, Band 19, S. 62 bis 65 bekannt. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt:
Oxalsäure, Maleinsäure, Fumarsäure, Bernsteinsäure, Glutarsäure, Adipinsäure, Sebacinsäure, Dodekandisäure, o-Phthalsäure, Isophthalsäure, Terephthalsäure, Trimellithsäure, Azelainsäure, 1,4-Cyclohexandicarbonsäure oder Tetrahydrophthalsäure, Korksäure, Azelainsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid,

Maleinsäureanhydrid, dimere Fettsäuren, deren Isomere und Hydrierungsprodukte sowie veresterbare Derivate, wie Anhydride oder Dialkylester, beispielsweise $C_1$-$C_4$-Alkylester, bevorzugt Methyl-, Ethyl- oder n-Butylester, der genannten Säuren eingesetzt werden. Bevorzugt sind Dicarbonsäuren der allgemeinen Formel HOOC-$(CH_2)_y$-COOH, wobei y eine Zahl von 1 bis 20, bevorzugt eine gerade Zahl von 2 bis 20 ist, besonders bevorzugt Bernsteinsäure, Adipinsäure, Sebacinsäure und Dodecandicarbonsäure.

Als mehrwertige Alkohole kommen zur Herstellung der Polyesterole in Betracht 1,2-Propandiol, Ethylenglykol, 2,2-Dimethyl-1,2-Ethandiol, 1,3-Propandiol, 1,2-Butandiol, 1,3-Butandiol, 1,4-Butandiol, 3-Methylpentan-1,5-diol, 2-Ethylhexan-1,3-diol, 2,4-Diethyloctan-1,3-diol, 1,6-Hexandiol, Poly-THF mit einer Molmasse zwischen 162 und 2000, Poly-1,3-propandiol mit einer Molmasse zwischen 134 und 1178, Poly-1,2-propandiol mit einer Molmasse zwischen 134 und 898, Polyethylenglykol mit einer Molmasse zwischen 106 und 458, Neopentylglykol, Hydroxypivalinsäureneopentylglykolester, 2-Ethyl-1,3-Propandiol, 2-Methyl-1,3-Propandiol, 2,2-Bis(4-hydroxycyclohexyl)propan, 1,1-, 1,2-, 1,3-und 1,4-Cyclohexandimethanol, 1,2-, 1,3- oder 1,4-Cyclohexandiol, Trimethylolbutan, Trimethylolpropan, Trimethylolethan, Neopentylglykol, Pentaerythrit, Glycerin, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit oder Isomalt.

Bevorzugt sind Alkohole der allgemeinen Formel HO-$(CH_2)_x$-OH, wobei x eine Zahl von 1 bis 20, bevorzugt eine gerade Zahl von 2 bis 20 ist. Bevorzugt sind Ethylenglycol, Butan-1,4-diol, Hexan-1,6-diol, Octan-1,8-diol und Dodecan-1,12- diol. Weiterhin bevorzugt ist Neopentylglykol.

Ferner kommen auch Polycarbonat-Diole, wie sie z.B. durch Umsetzung von Phosgen mit einem Überschuss von den als Aufbaukomponenten für die Polyesterpolyole genannten niedermolekularen Alkoholen erhalten werden können, in Betracht.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-$(CH_2)_z$-COOH ableiten, wobei z eine Zahl von 1 bis 20 ist und ein H-Atom einer Methyleneinheit auch durch einen $C_1$- bis $C_4$-Alkylrest substituiert sein kann. Beispiele sind ε-Caprolacton, β-Propiolacton, gamma-Butyrolacton und/oder Methyl-ε-caprolacton, 4-Hydroxybenzoesäure, 6-Hydroxy-2-naphthalinsäure oder Pivalolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Bei der Verbindung (VI) handelt es sich um mindestens eine, bevorzugt genau eine mehrfunktionelle, bevorzugt difunktionelle Carbonylverbindung, speziell ein Diketon oder Dialdehyd, ganz speziell einen Dialdehyd. Unter den Dialdehyden sind solche besonders bevorzugt, die am Kohlenstoffatom in α-Position zur Aldehydfunktion kein mit der verwendeten Base abstrahierbares Wasserstoffatom aufweisen.

Beispiele für Verbindungen (VI) sind Glyoxal, Malonaldehyd, Succinaldehyd, Glutaraldehyd, Capronaldehyd, Furan-2,5-dialdehyd, Pyrrol-2,5-dialdehyd, Pyridin-2,6-dialdehyd, Phthalaldehyd, Isophthalaldehyd und Terephthalaldehyd, besonders bevorzugt sind Glyoxal, Succinaldehyd, Glutaraldehyd, Isophthalaldehyd und Terephthalaldehyd.

Denkbar sind auch Kondensate von Formaldehyd beispielsweise als carbonyl-funktionalisierte Novolake und Lignin.

Es stellt eine bevorzugte Ausführungsform der vorliegenden Erfindung dar, insbesondere zur Herstellung des Polymers (S) der Komponente a), als Verbindung (VI) einen aromatischen Aldehyd einzusetzen, besonders bevorzugt Phthalaldehyd oder Isophthalaldehyd sowie Abmischungen von Phthalaldehyd und/oder Isophthalaldehyd mit monofunktionellen Carbonylverbindungen (II) und/oder mit di- oder höherfunktionellen Carbonylverbindungen (VI). Besonders bevorzugt sind Abmischungen von Phthalaldehyd und/oder Isophthalaldehyd mit Benzaldehyd und/oder Terephthalaldehyd. insbesondere mit diesen und ganz besonders bevorzugt Isophthalaldehyd sowie Abmischungen von Terephthalaldehyd mit diesem.

Weiterhin bevorzugt sind Verbindungen der Formel (V) in denen n mindestens 3 und bevorzugt 3 oder 4 ist. Ganz besonders bevorzugt sind solche Verbindungen, in denen der Rest $R^7$ abgeleitet ist von gegebenenfalls alkoxyliertem Trimethylolpropan oder Pentaerythrit. Diese Verbindungen weisen durch das gleichzeitige Vorliegen von Acrylat und Hydroxy-Gruppen eine besonders gute Eignung für die Dual-Cure-Härtung auf.

Die Herstellung der Komponente (S) kann dadurch erfolgen, dass man mindestens eine difunktionelle Carbonylverbindung (A2) und optional mindestens eine mehr als difunktionelle Carbonylverbindung (Ax) mit mindestens einer difunktionellen Acrylatverbindung (B2) und/oder mindestens einer mehr als difunktionellen Acrylatverbindung (By) umsetzt.

Folgende Umsetzungsmöglichkeiten führen zu der erfindungsgemäßen Komponente (S):

- 1) mindestens eine Verbindung (A2) und mindestens eine Verbindung (B2),

- 2) mindestens eine Verbindung (A2) und mindestens eine Verbindung (Ax) und mindestens eine Verbindung (By),
- 3) mindestens eine Verbindung (A2) und mindestens eine Verbindung (Ax) und mindestens eine Verbindung (B2),
- 4) mindestens eine Verbindung (A2) und mindestens eine Verbindung (By),
- 5) mindestens eine Verbindung (A2) und mindestens eine Verbindung (Ax) und mindestens eine Verbindung (By) und mindestens eine Verbindung (B2),
- 6) mindestens eine Verbindung (By) und mindestens eine Verbindung (A2) und mindestens eine Verbindung (B2),
- 7) mindestens eine Verbindung (Ax) und mindestens eine Verbindung (By) und mindestens eine Verbindung (A2) und mindestens eine Verbindung (B2).

Unter diesen sind die Reaktionsmöglichkeiten 4), 6) und 1) bevorzugt. Es stellt eine bevorzugte Ausführungsform der vorliegenden Erfindung dar, Verbindungen (S) nach Reaktionsmöglichkeit 1) herzustellen, bei der mindestens eine Verbindung (A2) und mindestens eine Verbindung (B2) miteinander umgesetzt werden.

Die mindestens eine Carbonylverbindung (Ax) mit mehr als zwei Carbonylgruppen weist im statistischen Mittel mehr als zwei Carbonylgruppen auf, bevorzugt mindestens 3, besonders bevorzugt 3 bis 6, ganz besonders bevorzugt 3 bis 5, insbesondere 3 bis 4 und speziell 3.

Dabei kann es sich um mindestens eine, beispielsweise ein bis vier, bevorzugt ein bis drei, besonders bevorzugt ein bis zwei und ganz besonders bevorzugt genau eine Verbindung (Ax) handeln. Darin sind die Carbonylgruppen Aldehydgruppen, wobei zusätzlich auch Ketogruppen enthalten sein können. Bevorzugt handelt es sich um ausschließlich Aldehydgruppen aufweisende Verbindungen.

Diese funktionellen Gruppen können dabei in beliebiger Weise miteinander verbunden sein, beispielsweise durch aromatische, aliphatische, cycloaliphatische oder heteroaromatische Gruppen oder Kombinationen davon, bevorzugt durch aromatische Gruppen.

Bevorzugte Verbindungen (Ax) sind beispielsweise mit drei Aldehydgruppen substituierte Aromaten, wie 1,2,3-, 1,2,4- oder 1,3,5-Benzoltrialdehyd, 2,4,6-Pyridintrialdehyd, oder Hydroformylierungsprodukte von Alkanpolyenen mit einer entsprechenden Anzahl von C=C-Doppelbindungen, bevorzugt Alkantrienen. Die mittlere Anzahl der Aldehydgruppen im Gemisch ist durch die Anzahl der C=C-Doppelbindungen und Hydroformylierung steuerbar. Derartige Produkte sind beispielsweise beschrieben in WO 98/28252, dort besonders von Seite 3, Zeile 36 bis Seite 11, Zeile 44 sowie den darin beschriebenen Beispielen 1 bis 9. Eine besonders bevorzugte Verbindung (Ax) ist 1,3,5-Benzoltrialdehyd.

Als Einsatzstoffe (A2) für die Reaktion werden optional mindestens eine, beispielsweise ein bis vier, bevorzugt ein bis drei, besonders bevorzugt ein bis zwei und ganz besonders bevorzugt genau eine difunktionelle Aldehydverbindung (Dialdehyd) eingesetzt.

Bevorzugt sind in der Verbindung (A2) die zwei Carbonylgruppen durch einen aromatischen Kohlenwasserstoffrest miteinander verbunden. Bevorzugt handelt es sich bei den Dialdehyden als Verbindungen (A2) um Verbindungen der Formel (VI)

$$OHC\text{-}R^8\text{-}CHO$$

$R^8$ ist bevorzugt unsubstituiertes oder mit Halogen, $C_1$-$C_8$-Alkyl, $C_2$-$C_8$-Alkenyl, Carboxy, Carboxy-$C_1$-$C_8$-Alkyl, $C_1$-$C_{20}$-Acyl, $C_1$-$C_8$-Alkoxy, $C_6$-$C_{12}$-Aryl, Hydroxyl oder hydroxysubstituiertem $C_1$-$C_8$-Alkyl substituiertes $C_6$-$C_{12}$-Arylen.

Bei mindestens einer der Verbindungen (A2) handelt es sich (insbesondere zur Herstellung des Polymers (S) der Komponente a), um einen aromatischen Dialdehyd mit auf die Bindungen der beiden Aldehydgruppen bezogener gewinkelter Molekülstruktur. Gewinkelte aromatische Dialdehyde sind Verbindungen, bei denen die zwei Aldehydgruppen an einen aromatischen Kern gebunden sind und die Bindungen, mit denen die Aldehydgruppen an den aromatischen Kern gebunden sind, zueinander in einer nicht-linearen Beziehung stehen, d.h. einen von 0° bzw. 180 ° verschiedenen Winkel bilden. Bevorzugte Verbindungen (A2) sind gewinkelte aromatische Dialdehyde, ausgewählt aus Furan-2,5-dialdehyd, Pyrrol-2,5-dialdehyd, Pyridin-2,6-dialdehyd, Phthalaldehyd, Isophthalaldehyd und deren Gemisch, besonders bevorzugt sind Isophthalaldehyd, Phthalaldehyd und deren Gemisch und insbesondere Isophthalaldehyd alleine als einziger aromatischer Dialdehyd oder als einzige Dialdehydverbindung (A2).

Deshalb wird zur Herstellung des Polymers (S) vorzugsweise Isophthalaldehyd als einzige Carbonylverbindung eingesetzt oder es wird Isophthalaldehyd in Kombination mit weiteren Carbonylverbindungen eingesetzt, insbesondere monofunktionellen Carbonylverbindungen (II) (vorzugsweise Benzaldehyd) oder di- oder höherfunktionellen Carbonylverbindungen (VI) (vorzugsweise Terephthalaldehyd). Wenn zur Herstellung des Polymers (S) Isophthalaldehyd in Kombination mit weiteren Carbonylverbindungen eingesetzt wird, so beträgt das auf die Carbonylfunktionalität bezogene molare Verhältnis von Isophthalaldehyd zu weiteren Carbonylverbindungen vorzugsweise von 0,5 bis 2, insbesondere von 1 bis 2.

Gegenstand der Erfindung ist daher auch ein Verfahren zur Härtung von härtbaren Zusammensetzungen, wobei

- mindestens eine härtbare Zusammensetzung zur Verfügung gestellt wird und

- durch Erwärmen auf Temperaturen von größer oder gleich 60 °C eine Aushärtung der Zusammensetzung bewirkt wird,

wobei die härtbare Zusammensetzung mindestens folgende Bestandteile enthält

(a) mindestens ein Polymer (S) erhältlich durch Reaktion mindestens einer Verbindung mit zwei Aldehydgruppen, ausgewählt aus aromatischen Dialdehyden mit auf die Bindungen der beiden Aldehydgruppen bezogener gewinkelter Molekülstruktur (vorzugsweise Phthalaldehyd, Isophthalaldehyd und deren Gemisch) und mindestens einer Acrylatverbindung (B), ausgewählt aus der Gruppe bestehend aus Acrylatverbindungen mit mehr als zwei Acrylatgruppen (By) und Diacrylatverbindungen (B2),
(b) optional mindestens eine nicht-polymere Verbindung, ausgewählt aus Verbindungen (S1) mit einer $\alpha$-(1'-Hydroxyalkyl)acrylatgruppe und Verbindungen (S2) mit zwei oder mehr $\alpha$-(1'-Hydroxyalkyl)acrylatgruppen,
(c) mindestens eine Verbindung (C), die mindestens zwei Thiolgruppen trägt,
(d) optional mindestens einen Reaktivverdünner (D) mit einem zahlenmittleren Molekulargewicht $M_n$ von weniger als 1000 g/mol, der mindestens zwei (Meth)Acrylatgruppen aufweist,
(e) optional mindestens einen Katalysator (E), der die Anlagerung von Thiolgruppen an Acrylatgruppen zu beschleunigen vermag, und
(f) optional mindestens einen Photoinitiator (F).

Das Polymer (S) kann außer aus dem aromatischen Dialdehyd mit auf die Bindungen der beiden Aldehydgruppen bezogener gewinkelter Molekülstruktur auch aus einer oder mehreren weiteren, davon verschiedenen Verbindungen mit ein, zwei oder mehr Aldehydgruppen hergestellt sein.

Die mindestens eine Acrylatverbindung (By) mit mehr als zwei Acrylatgruppen weist im statistischen Mittel mehr als zwei Acrylatgruppen auf, bevorzugt mindestens 3, besonders bevorzugt 3 bis 8, ganz besonders bevorzugt 3 bis 6, insbesondere 3 bis 4 und speziell 3.

Dabei kann es sich um mindestens eine, beispielsweise ein bis vier, bevorzugt ein bis drei, besonders bevorzugt ein bis zwei und ganz besonders bevorzugt genau eine Verbindung (By) handeln.

Die Acrylatverbindungen (By) entsprechen den oben beschriebenen Verbindungen der Formel (IV) mit Werten für n von mindestens 3. Dabei kann es sich beispielsweise um Acrylsäureester von Polyalkoholen, wie Polyolen, Polyetherolen, Polyesterolen oder Polyacrylatpolyolen, mit der entsprechenden Funktionalität handeln. Somit können geeignete Verbindungen (By) Polyetheracrylate, Polyesteracrylate, acrylierte Polyacrylatole oder Urethanacrylate mit der gewünschten Funktionalität größer 2 sein.

Bevorzugt handelt es sich dabei um Acrylate von ein- bis zwanzigfach und besonders bevorzugt drei- bis zehnfach ethoxyliertem, propoxyliertem oder gemischt ethoxyliertem und propoxyliertem und insbesondere ausschließlich ethoxyliertem Neopentylglykol, Glycerin, Trimethylolpropan, Trimethylolethan oder Pentaerythrit.

Bevorzugte Verbindungen (B2) sind Ethylenglykoldiacrylat, 1,2-Propandioldiacrylat, 1,3-Propandioldiacrylat, 1,4-Butandioldiacrylat und 1,6-Hexandioldiacrylat, bevorzugte Verbindungen (By) sind Trimethylolpropantriacrylat, Glycerintriacrylat, Pentaerythrittetraacrylat, und Triacrylat von ein- bis zwanzigfach ethoxyliertem Trimethylolpropan sowie Tetraacrylat von ein- bis zwanzigfach ethoxyliertem Pentaerythrit.

Besonders bevorzugte Verbindungen (B2) sind 1,4-Butandioldiacrylat, 1,6-Hexandioldiacrylat, und besonders bevorzugte Verbindungen (By) sind Glycerintriacrylat, Trimethylolpropantriacrylat, Pentaerythrittetraacrylat und Triacrylat von ein- bis zwanzigfach ethoxyliertem Trimethylolpropan sowie Tetraacrylat von ein- bis zwanzigfach ethoxyliertem Pentaerythrit.

Als weiterer Einsatzstoff können optional mindestens ein, beispielsweise ein bis vier, bevorzugt ein bis drei, besonders bevorzugt ein bis zwei und ganz besonders bevorzugt genau ein difunktionelles Acrylat (B2) eingesetzt werden.

Bei diesen handelt es sich beispielsweise um die oben beschriebenen Verbindungen der Formel (IV) mit n=2.

Bei der Diacrylatverbindung (B2) handelt es sich um beliebige difunktionelle Acrylate, bevorzugt um Diacrylate von Alkandiolen oder Cycloalkandiolen sowie niederen Polyalkylenglykolen, bevorzugt Polyethylenglykolen oder Polypropylenglykolen, oder - wenn auch weniger bevorzugt - difunktionelle Acrylamide von Diaminen, vorzugsweise von linearen oder verzweigten aliphatischen oder cycloaliphatischen Diaminen.

Bevorzugt handelt es sich bei den Verbindungen (B2) um solche mit einem Molekulargewicht unter 400 g/mol, besonders bevorzugt um strukturell einheitliche Verbindungen, d.h. solche, die keine signifikante Molekulargewichtsverteilung aufweisen.

Bei den Alkandiolen kann es sich bevorzugt handeln um Ethylenglykol, 2,2-Dimethyl-1,2-Ethandiol, 1,3-Propandiol, 1,2-Propandiol, 1,2-Butandiol, 1,3-Butandiol, 1,4-Butandiol, 3-Methyl-pentan-1,5-diol, 2-Ethylhexan-1,3-diol, 2,4-Diethyloctan-1,3-diol, 1,6-Hexandiol, Neopentylglykol, 2-Ethyl-1,3-Propandiol oder 2-Methyl-1,3-Propandiol. Bei den Cycloalkandiolen kann es sich bevorzugt handeln um 2,2-Bis(4-hydroxycyclohexyl)propan, 1,1-, 1,2-, 1,3- und 1,4-Cyclohexandimethanol, 1,2-, 1,3- oder 1,4-Cyclo-hexandiol. Bei den Polyalkylenglykolen kann es sich bevorzugt handeln um Polyethylenglykole, Polypropylenglykole, Poly-THF oder Poly-1,3-propandiol. Besonders bevorzugt sind Polyethylenglykole oder Polypropylenglykole als Gemisch der Isomere. Unter den Polyalkylenglykolen sind Di- bis Pentamere bevorzugt.

Bei den Diaminen handelt es sich bevorzugt um lineare oder verzweigte aliphatische oder cycloaliphatische primäre und/oder sekundäre Diamine, wie zum Beispiel 1,2-Diaminoethan, 1,2- oder 1,3-Diaminopropan, 1,4-Diaminobutan, 1,5-Diaminopentan, 1,6-Diaminohexan, 1,7-Diaminoheptan, 1,8-Diaminooktan, 1,9-Diaminononan, 1,10-Diaminodekan, 1,12-Diaminododecan oder Piperazin.

Besonders bevorzugte Diacrylate (B2) sind Ethylenglykoldiacrylat, 1,2-Propandioldiacrylat, 1,3-Propandioldiacrylat, 1,3-Butandioldiacrylat, 1,4-Butandioldiacrylat, 1,6-Hexandioldiacrylat, Diethylenglykoldiacrylat, Dipropylenglykoldiacrylat, Tripropylenglykoldiacrylat, N,N'-Bisacryloyl-1,2-diaminoethan, N,N'-Bisacryloyl-1,6-diaminohexan oder N,N'-Bisacryloyl-piperazin. Ganz besonders bevorzugte Verbindungen sind 1,4-Butandioldiacrylat, 1,6-Hexandioldiacrylat, Dipropylenglykoldiacrylat und Tripropylenglykoldiacrylat.

Die Durchführung der Baylis-Hillman-Reaktion ist dem Fachmann an sich bekannt und Gegenstand mehrerer Literaturüberblicke.

Die Reaktion kann bei einer Temperatur zwischen 0 °C und 100 °C, bevorzugt 20 bis 80 °C und besonders bevorzugt 25 °C bis 60 °C durchgeführt werden. Um Ketone zur Reaktion zu bringen kann es erforderlich sein, hohen Druck anzulegen.

Als Katalysator (E1) für die Herstellung der Baylis-Hillman Addukte wird zumeist ein tertiäres Amin oder Phosphin verwendet, beispielsweise Trimethylamin, Triethylamin, Tri-n-butylamin, Ethyl-di-*iso*-Propylamin, Methyl-di-*iso*-Propylamin, N-Methylmorpholin, N-Methylpiperidin, Triethanolamin, N,N-Dimethylethanolamin, 4-Dimethylaminopyridin, 1,5-Diazabicyclo[4.3.0]-non-5-en (DBN), 1,8-Diazabicyclo[5.4.0]-undec-7-en (DBU), Pyrrocolin, Chinuclidin, 3-Hydroxychinuclidin, Chinidin, Trimethylphosphin, Triethylphosphin, Tri-n-Butylphosphin, Dimethylphenylphosphin und bevorzugt 1,4-Diaza-bicyclo[2.2.2]octan (DABCO), 1,5-Diazabicyclo[4.3.0]-non-5-en (DBN), 1,8-Diazabicyclo[5.4.0]-undec-7-en (DBU), Chinuclidin und 3-Hydroxychinuclidin, besonders bevorzugt sind 1,4-Diaza-bicyclo[2.2.2]octan (DABCO) und 3-Hydroxychinuclidin.

Der Katalysator wird in der Regel in Mengen von 1 bis 100 mol% bzgl. Acrylgruppen eingesetzt, bevorzugt 2 - 50, besonders bevorzugt 3 - 40 und ganz besonders bevorzugt 5 - 30 mol%.

Die Katalyse der Addition kann homogen oder mit einem an einen Träger gebundenen Katalysator heterogen erfolgen. In einer bevorzugten Ausführungsform wird der Katalysator nach der Addition wieder aus dem Reaktionsgemisch entfernt, beispielsweise durch Ionentauscher, Neutralisation oder Extraktion.

Weiterhin ist es möglich, zusätzlich zu den genannten Amin- oder Phosphin-Katalysatoren mindestens einen Co-Katalysator in Mengen bis zu 5 Gew%, bevorzugt von 0,1 bis 3, besonders bevorzugt 0,2 bis 2 Gew% einzusetzen, bei dem es sich um Alkohole oder Phenole handeln kann. Bei den Phenolen handelt es sich neben Phenol bevorzugt um solche Phenole, die mindestens eine Alkylkette am aromatischen Ring tragen.

Bevorzugte Phenole sind Alkylphenole, beispielsweise o-, m- oder p-Kresol (Methylphenol), 2-tert.-Butyl-4-methylphenol, 6-tert.-Butyl-2,4-dimethyl-phenol, 2,6-Di-tert.-Butyl-4-methylphenol, 2-tert.-Butylphenol, 4-tert.-Butylphenol, 2,4-di-tert.-Butylphenol, 2-Methyl-4-tert.-Butylphenol, 4-tert.-Butyl-2,6-dimethylphenol, oder 2,2'-Methylen-bis-(6-tert.-butyl-4-methylphenol), 4,4'-Oxydiphenyl, 3,4-Methylendioxydiphenol (Sesamol), 3,4-Dimethylphenol, Hydrochinon, Brenzcatechin (1,2-Dihydroxybenzol), 2-(1'-Methylcyclohex-1'-yl)-4,6-dimethylphenol, 2- oder 4-(1'-Phenyl-eth-1'-yl)-phenol, 2-tert-Butyl-6-methylphenol, 2,4,6-Tris-tert-Butylphenol, 2,6-Di-tert.-butylphenol, 2,4-Di-tert.-butylphenol, 4-tert.-Butylphenol, Dodecylphenol, Undecylphenol, Decylphenol, Nonylphenol [11066-49-2], Octylphenol [140-66-9], 2,6-Dimethylphenol, Bisphenol A, Bisphenol F, Bisphenol B, Bisphenol C, Bisphenol S, 3,3',5,5'-Tetrabromobisphenol A, 2,6-Ditert-Butyl-p-kresol, Koresin® der BASF SE, 3,5-Di-tert-Butyl-4-hydroxybenzoesäuremethylester, 4-tert-Butylbrenzcatechin, 2-Hydroxybenzylalkohol, 2-Methoxy-4-methylphenol, 2,3,6-Trimethylphenol, 2,4,5-Trimethylphenol, 2,4,6-Trimethylphenol, 2-Isopropylphenol, 4-Isopropylphenol, 6-Isopropyl-m-Kresol, n-Octadecyl-β-(3,5-di-tert-butyl-4-hydroxyphenyl)propionat, 1,1,3-Tris-(2-methyl-4-hydroxy-5-tert-butylphenyl)butan, 1,3,5-Trimethyl-2,4,6-tris-(3,5-di-tert-butyl-4-hydroxybenzyl)benzol, 1,3,5-Tris-(3,5-di-tert-butyl-4-hydroxybenzyl)isocyanurat, 1,3,5-Tris-(3,5-di-tert-butyl-4-hydroxyphenyl)-propionyloxyethyl-isocyanurat, 1,3,5-Tris-(2,6-dimethyl-3-hydroxy-4-tert-butylbenzyl)-isocyanurat oder Pentaerythrit-tetrakis-[β-(3,5-di-tert-butyl-4-hydroxyphenyl)-propionat], 2,6-Di-*tert*.-butyl-4-dimethylaminomethylphenol, 6-*iso*.-Butyl-2,4-dinitrophenol, 6-*sek*.-Butyl-2,4-dinitrophenol, Irganox® 565, 1141, 1192, 1222 und 1425 der Firma BASF, 3-(3',5'-Di-*tert*.-butyl-4'-hydroxyphenyl)propionsäureoctadecylester, 3-(3',5'-Di-*tert*.-buty1-4'-hydroxyphenyl)-propionsäurehexadecylester, 3-(3',5'-Di-*tert*.-butyl-4'-hydroxyphenyl)propionsäureoctylester, 3-Thia-1,5-pentandiol-bis-[(3',5'-di-*tert*.-butyl-4'-hydroxyphenyl)propionat], 4,8-Dioxa-1,11-undecandiol-bis-[(3',5'-di-*tert*.-butyl-4'-hydroxyphenyl)propionat], 4,8-Dioxa-1,11-undecandiol-bis-[(3'-*tert*.-butyl-4'-hydroxy-5'-methylphenyl)propionat], 1,9-Nonandiol-bis-[(3',5'-di-*tert*.-butyl-4'-hydroxyphenyl)propionat], 1,7-Heptandiamin-bis[3-(3',5'-di-*tert*.-butyl-4'-hydroxyphenyl)propionsäureamid], 1,1-Methandiamin-bis[3-(3',5'-di-*tert*.-butyl-4'-hydroxyphenyl)propionsäureamid], 3-(3',5'-di-*tert*.-Butyl-4'-hydroxyphenyl)propionsäurehydrazid, 3-(3',5'-di-Methyl-4'-hydroxyphenyl)propionsäurehydrazid, Bis(3-*tert*.-Butyl-5-ethyl-2-hydroxy-phen-1-yl)methan, Bis(3,5-di-*tert*.-Butyl-4-hydroxy-phen-1-yl)methan, Bis[3-(1'-methylcyclohex-1'-yl)-5-methyl-2-hydroxy-phen-1-yl]methan, Bis(3-*tert*.-Butyl-2-hydroxy-5-methyl-phen-1-yl)methan, 1,1-Bis(5-*tert*.-Butyl-4-hydroxy-2-methyl-phen-1-yl)ethan, Bis(5-*tert*.-Butyl-4-hydroxy-2-methyl-phen-1-yl)sulfid, Bis(3-*tert*.-Butyl-2-hydroxy-5-methyl-phen-1-yl)sulfid, 1,1-Bis(3,4-Dimethyl-2-hydroxy-phen-1-yl)-2-methylpropan, 1,1-Bis(5-*tert*.-Butyl-3-methyl-2-hydroxy-phen-1-yl)-butan, 1,3,5-Tris[1'-(3",5"-di-*tert*.-Butyl-4"-hydroxy-phen-1"-yl)-meth-1'-yl]-2,4,6-trimethylbenzol, 1,1,4-Tris(5'-*tert*.-Butyl-4'-hydroxy-2'-methyl-phen-1'-yl)butan, Alkoxyphenole, beispielsweise 2-Methoxyphenol (Guajacol, Brenzcatechinmonomethylether), 2-Ethoxyphenol, 2-Isopropoxyphenol, 4-Methoxyphenol (Hydrochinonmonomethylether), Mono- oder Di-tert.-Butyl-4-methoxyphenol, 3,5-Di-tert-butyl-4-hydroxyanisol, 3-Hydroxy-4-methoxybenzylalkohol, 2,5-Dimethoxy-4-hydroxybenzylalkohol (Syringaalkohol), 4-Hydroxy-3-methoxybenzaldehyd (Vanillin), 4-Hydroxy-3-ethoxybenzaldehyd (Ethylvanillin), 3-Hydroxy-4-methoxybenzaldehyd (Isovanillin), 1-(4-Hydroxy-3-methoxy-phenyl)-ethanon (Acetovanillon), Eugenol, Dihydroeugenol, Isoeugenol, oder Tocopherole, wie z.B. α-, β-, γ-, δ- und ε-Tocopherol, Tocol oder α-Tocopherolhydrochinon.

Die Stöchiometrie zwischen Acrylatgruppen und Carbonylverbindungen beträgt in der Regel 1 : 0,05 - 1,5, bevorzugt 1 : 0,1 - 1,3, besonders bevorzugt 1 : 0,2 - 1,0 und ganz besonders bevorzugt 1 : 0,4 - 1,0.

Das molare Verhältnis von mehr als difunktionellen Verbindungen (Ax) und (By) in Summe zur Summe der difunktionellen Verbindungen (A2) und (B2) beträgt in der Regel von 1 : 0 - 5, bevorzugt von 1 : 0,1 bis 4, besonders bevorzugt von 1 : 0,25 bis 3, ganz besonders bevorzugt von 1 : 0,5 bis 2 und insbesondere 1 : 0,8 - 1,5.

Die Reaktion kann in einem Lösungsmittel durchgeführt werden, als Lösungsmittel können bevorzugt Wasser, Petrolether, Ligroin, Toluol, Benzol, Xylol, Tetrahydrofuran (THF), Diethylether, Dioxan, oder aber auch das verwendete Acrylat eingesetzt werden. Die Reaktion kann auch in Abwesenheit eines Lösungsmittels durchgeführt werden.

Wird das Acrylat als Lösungsmittel verwendet, so kann das entstehende Reaktionsgemisch, das sowohl das verwendete Acrylat als auch α-(1'-Hydroxyalkyl)acrylat enthält, aufgereinigt oder ohne Abtrennung des Acrylats als solches eingesetzt werden, wobei das Acrylat dann als Reaktivverdünner (D) fungiert.

Auf eine Aufreinigung des Reaktionsgemisches kann verzichtet werden, selbstverständlich kann das Gemisch natürlich auch durch Destillation, Strippen, saure, alkalische oder neutrale Wäsche, Filtration oder dergleichen gereinigt werden.

In einer bevorzugten Ausführungsform wird die Carbonylverbindung im Verhältnis zu den Acrylatgruppen unterstöchiometrisch eingesetzt, so dass Reaktionsgemische erhalten werden, die das Baylis-Hillman-Produkt im Gemisch mit dem eingesetzten Acrylat enthalten. Derartige Gemische können mit Vorteil in Beschichtungsmassen für die Strahlungshärtung und/oder Dual-Cure-Härtung eingesetzt werden.

Die Polymere (S) nach den oben aufgeführten Reaktionsmöglichkeiten 2) bis 9) zeichnen sich gegenüber den nach Reaktionsmöglichkeit 1) erhältlichen Polymeren dadurch aus, dass sie verzweigt sind, wohingegen die nach Reaktionsmöglichkeit 1) erhältlichen Polymere lineare Polymere sind. Bevorzugt sind lineare Polymere, erhältlich nach Reaktionsmöglichkeit 1).

Der Verzweigungsgrad (Degree of Branching, DB) eines verzweigten Polymers berechnet sich wie offenbart in H. Frey et al., Acta Polym. 1997, 48, 30-35, siehe dort Formel (1).

Gemäß Formel (1) von Frey et al. ist der Verzweigungsgrad definiert als

$$DB\ [\%] = (D + T) / (D + L + T), \text{ multipliziert mit } 100$$

worin D, T und L jeweils die Anteile von verzweigenden, terminalen oder linear eingebauten Monomereinheiten im Polymer sind.

Die verzweigten Polymere unter den Verbindungen (S) können beispielsweise einen Verzweigungsgrad von mindestens 5% aufweisen, bevorzugt von mindestens 10%, besonders bevorzugt von mindestens 15%, ganz besonders bevorzugt mindestens 20% und insbesondere mindestens 25%. Der Verzweigungsgrad lässt sich beispielsweise per NMR-Analytik auf Basis von Modellsubstanzen bestimmen.

Ein Polymer mit einem ideal verzweigten Aufbau ohne lineare Anteile weist einen Verzweigungsgrad von 100% auf, bevorzugt sind die erfindungsgemäßen Polymere erhältlich als verzweigte oder hochverzweigte Polymere mit einem Verzweigungsgrad bis zu 99,9%, besonders bevorzugt bis zu 99%, ganz besonders bevorzugt bis zu 98% und insbesondere bis zu 95%.

Die Polymere (S) sind in der Regel farblos bis bernsteinfarben gefärbt und lösen sich gut in Lösemitteln, wie Methanol, Ethanol, Dimethylformamid, Dimethylacetamid, Essigester, Butylacetat, Tetrahydrofuran, Aceton, 2-Butanon oder Toluol.

In einer bevorzugten Ausführungsform werden die Carbonylverbindungen im Verhältnis zu den Acrylatgruppen aufweisenden Verbindungen unterstöchiometrisch eingesetzt, so dass Reaktionsgemische erhalten werden, die das Baylis-Hillman-Produkt im Gemisch mit dem eingesetzten Acrylat enthalten. Derartige Gemische können mit Vorteil in

Massen für die Strahlungshärtung und/oder Dual-Cure-Härtung eingesetzt werden.

Die härtbare Zusammensetzung enthält mindestens eine Verbindung (C), die mindestens zwei Thiolgruppen trägt. Die Menge an Verbindung (C) in der härtbaren Zusammensetzung beträgt vorzugsweise von 10 bis 70 Gew.% oder von 20 bis 70 Gew.% oder von 25 bis 60 Gew.% oder von 40 bis 60 Gew.%. Die Verbindung (C) weist erfindungsgemäß mindestens zwei Thiolgruppen auf, bevorzugt zwei bis 20, besonders bevorzugt zwei bis 15, besonders bevorzugt zwei bis zwölf, insbesondere drei bis zehn und speziell vier bis sechs. Als Mercaptogruppen bzw. Thiolgruppen werden erfindungsgemäß -SH Gruppen verstanden, besonders solche, die an tertiäre Kohlenstoffatome, Methingruppen oder Methylengruppen gebunden sind, besonders bevorzugt solche, die an Methylengruppen gebunden sind.

Bevorzugte Verbindungen (C) besitzen ein zahlenmittleres Molekulargewicht $M_n$ von mindestens 400 g/mol. Vorzugsweise sollte ein Molekulargewicht $M_n$ von 5000 g/mol nicht überschritten werden, bevorzugt ist $M_n$ nicht mehr als 4500, besonders bevorzugt nicht mehr als 4000, ganz besonders bevorzugt nicht mehr als 3500 und insbesondere nicht mehr als 3000 g/mol. Durch das angegebene Molekulargewicht ist es möglich, die Flüchtigkeit und den typischen Geruch der Mercaptoverbindungen so gering wie möglich zu halten.

Derartige Verbindungen (C) sind bevorzugt erhältlich durch Reaktion mindestens eines Esters von thiolgruppentragenden Carbonsäuren mit Polyalkoholen. Bevorzugt handelt es sich bei den Verbindungen (C) um Verbindungen (C1) der Formel

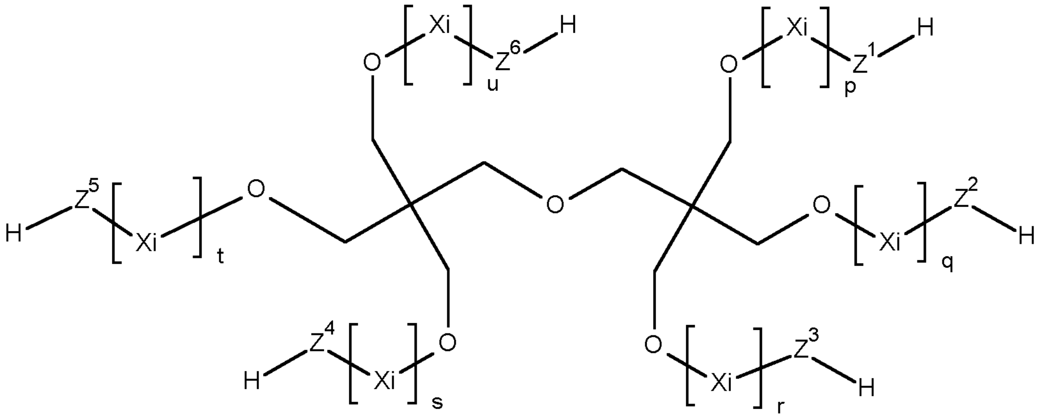

oder um Verbindungen (C2) der Formel

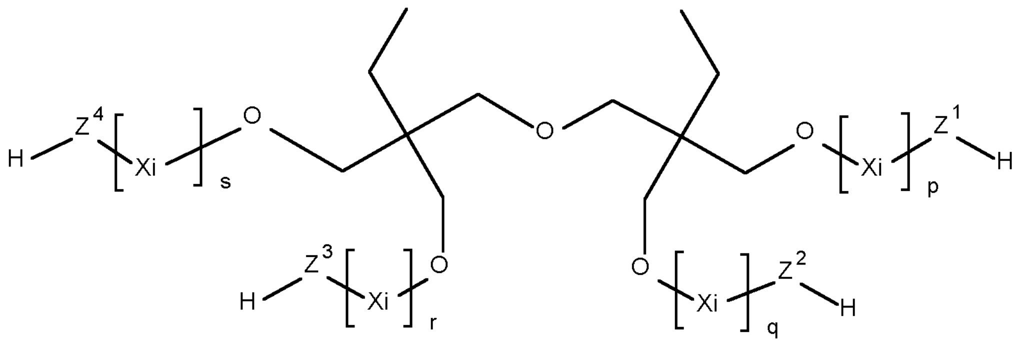

oder um Verbindungen (C3) der Formel

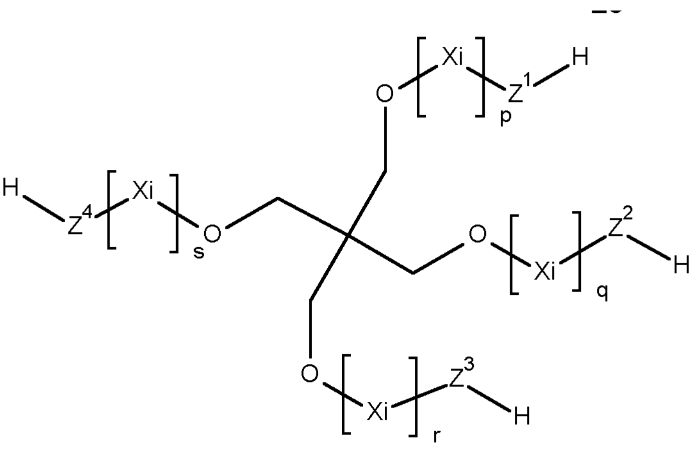

worin

$Z1$, $Z^2$, $Z^3$, $Z^4$, $Z^5$ und $Z^6$ jeweils unabhängig voneinander ein Schwefelatom oder einen Rest der Formel -(C=O)-$R^3$-S-,
$R^3$ einen zweiwertigen $C_1$- bis $C_6$-Alkylenrest,
p, q, r, s, t, u, jeweils unabhängig voneinander Null oder eine positive ganze Zahl von 1 bis 5, bevorzugt Null oder eine positive ganze Zahl von 1 bis 4 und besonders bevorzugt Null oder eine positive ganze Zahl von 1 bis 3 und ganz besonders bevorzugt Null ist,
jedes $X_i$ für i = 1 bis p, 1 bis q, 1 bis r, 1 bis s, 1 bis t und 1 bis u, unabhängig voneinander ausgewählt sein kann aus der Gruppe bestehend
aus $-CH_2-CH_2-O-$, $-CH_2-CH(CH_3)-O-$, $-CH(CH_3)-CH_2-O-$, $-CH_2-C(CH_3)_2-O-$, $-C(CH_3)_2-CH_2-O-$, -C $H_2$-CHVin-O-, -CHVin-$CH_2$-O-, $-CH_2$-CHPh-O- und -CHPh-$CH_2$-O-, bevorzugt aus der Gruppe $-CH_2-CH_2-O-$, $-CH_2-CH(CH_3)-O-$ und $-CH(CH_3)-CH_2-O-$, und besonders zugt $-CH_2-CH_2-O-$
worin Ph für Phenyl und Vin für Vinyl steht,
mit der Maßgabe, dass im Fall der Verbindungen (C1) mindestens vier, bevorzugt mindestens fünf und besonders bevorzugt alle sechs der Reste $Z^1$ bis $Z^6$ eine Gruppe der Formel -(C=O)-$R^3$-S- darstellen und im Fall der Verbindungen (C2) und (C3) mindestens drei, bevorzugt alle vier Reste $Z^1$ bis $Z^4$ eine Gruppe der Formel -(C=O)-$R^3$-S- darstellen. Die übrigen Reste $Z^1$ bis $Z^6$ bzw. $Z^1$ bis $Z^4$ stellen dann eine Einfachbindung dar.

Beispiele für $R^3$ sind Methylen, 1,2-Ethylen, 1,2-Propylen, 1,3-Propylen, 1,4-Butylen, 1,5-Pentylen und 1,6-Hexylen, bevorzugt sind Methylen, 1,2-Ethylen, 1,3-Propylen, 1,4-Butylen und 1,5-Pentylen, besonders bevorzugt sind Methylen und 1,2-Ethylen.

Weiterhin kann es sich bei den Verbindungen (C) um Verbindungen (C4) der Funktionalität zwei oder drei der Formel

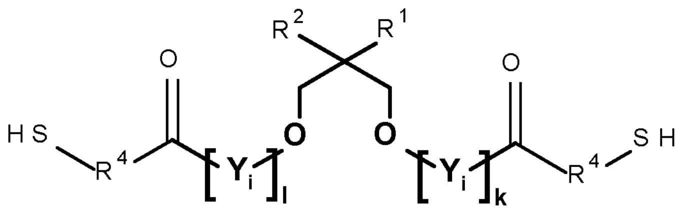

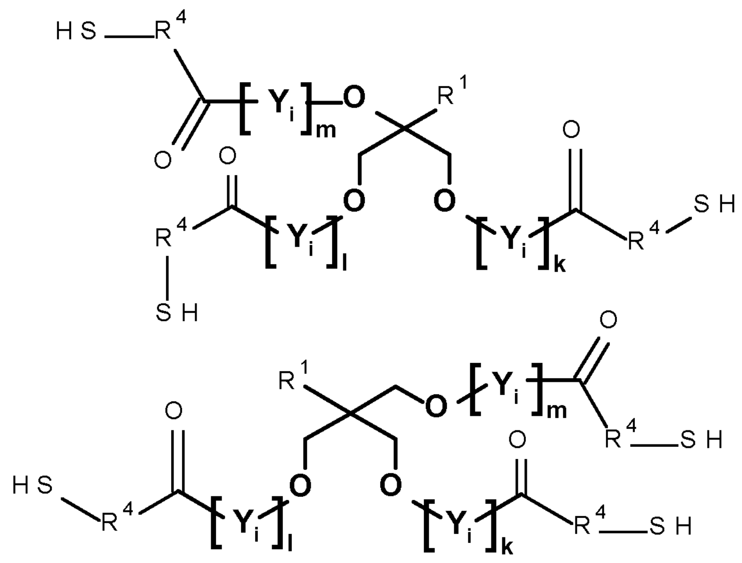

handeln, worin

$R^1$, $R^2$ jeweils unabhängig voneinander Wasserstoff oder einen $C_1$- bis $C_4$-Alkylrest,
$R^4$ Methylen oder 1,2-Ethylen,
k, l, m, n, jeweils unabhängig voneinander Null oder eine positive ganze Zahl von 1 bis 5, bevorzugt Null oder eine positive ganze Zahl von 1 bis 4 und besonders bevorzugt Null oder eine positive ganze Zahl von 1 bis 3,
jedes $Y_i$ für i = 1 bis k, 1 bis l, 1 bis m und 1 bis n, unabhängig voneinander ausgewählt sein kann aus der Gruppe bestehend
aus $-CH_2-CH_2-O-$, $-CH_2-CH(CH_3)-O-$, $-CH(CH_3)-CH_2-O-$, $-CH_2-C(CH_3)_2-O-$, $-C(CH_3)_2-CH_2-O-$, $-CH_2-$CHVin-O-, -CHVin-$CH_2$-O-, $-CH_2-$CHPh-O- und -CHPh-$CH_2$-O-, bevorzugt aus der Gruppe $-CH_2-CH_2-O-$, $-CH_2-CH(CH_3)-O-$ und $-CH(CH_3)-CH_2-O-$, und besonders zugt $-CH_2-CH_2-O-$
worin Ph für Phenyl und Vin für Vinyl steht.

Besonders bevorzugte Di- oder Trimercaptoverbindungen (C4) sind dabei die Veresterungsprodukte von 3-Mercaptopropionsäure oder Mercaptoessigsäure mit Diolen oder Triolen, wobei die Diole oder Triole ausgewählt sind aus der Gruppe bestehend aus Ethylenglykol, 1,2-Propandiol, 1,3-Propandiol, 1,1-Dimethylethan-1,2-diol, 2-Butyl-2-ethyl-1,3-Propandiol, 2-Ethyl-1,3-Propandiol, 2-Methyl-1,3-Propandiol, Neopentylglykol, 1,2-, 1,3- oder 1,4-Butandiol, 1,6-Hexandiol, 1,10-Dekandiol, Tetramethylcyclobutandiol, 1,2-, 1,3- oder 1,4-Cyclohexandiol, 2-Ethyl-1,3-Hexandiol, 2,4-Diethyl-oktan-1,3-diol, 2,2-Bis(4-hydroxycyclohexyl)propan, 1,1-, 1,2-, 1,3- und 1,4-Cyclohexandimethanol, 1,2-, 1,3- oder 1,4-Cyclohexandiol, Trimethylolbutan, Trimethylolpropan, Trimethylolethan, Glycerin, sowie deren alkoxylierten, beispielsweise ethoxylierten und/oder propoxylierten, bevorzugt ethoxylierten Produkte. Bevorzugt handelt es sich bei den di- oder trifunktionellen Verbindungen (C4) um Veresterungs-produkte von 3-Mercaptopropionsäure oder Mercaptoessigsäure mit Polyethylenglykol der Mol-masse 106 bis 2000, Polypropylenglykol der Molmasse 134 bis 2500, Poly-THF der Molmasse 162 bis 2000, optional ethoxyliertem Trimethylolpropan der Molmasse 134 bis 1500 und optional ethoxyliertem Glycerin der Molmasse 92 bis 1100. Besonders bevorzugt handelt es sich bei den di- oder trifunktionellen Verbindungen (C4) um 3-Mercaptopropionsäure Ester auf Basis von Polypropylenglykol der Molmasse 2200 (PPGMP 2200), 3-Mercaptopropionsäure Ester auf Basis von Polypropylenglykol der Molmasse 800 (PPGMP 800), Ethoxyliertes Trimethylolpropantri(3-mercapto-propionat) 1300 (ETTMP 1300), Ethoxyliertes Trimethylolpropantri(3-mercapto-propionat) 700 (ETTMP 700), Trimethylolpropantrimercaptoacetate (TMPMA), Glykoldi-(3-mercaptopropionat) (GDMP), Trimethylolpropantri-(3-mercaptopropionat) (TMPMP). Bevorzugte derartige Verbindungen mit zwei oder drei Mercaptogruppen sind ausgewählt aus der Gruppe bestehend aus Ethylenglykoldi-(3-mercaptopropionat) (GDMP), Trimethylolpropan tri-(3-mercaptopropionat) (TMPMP), Trimethylolpropan-trimercaptoacetat (TMPMA), 3-Mercaptopropionsäureester von Poly-1,2-propylenglykol der Molmasse 500 bis 2500 g/mol oder 3-Mercaptopropionsäureester von ethoxyliertem Trimethylolpropan der Molmasse bis zu 1500 g/mol.

Beispiele für Verbindungen (C1) bis (C3) mit einer höheren Funktionalität sind Pentaerythritoltetra-(3-mercaptopropionat) (PETMP), Pentaerythritoltetramercaptoacetat (PETMA), Di-Pentaerythritoltetra-(3-mercaptopropionat), Di-Pentaerythritoltetramercaptoacetat, Di-Pentaerythritolpenta-(3-mercaptopropionat), Di-Pentaerythritolpentamercaptoacetat, Di-Pentaerythritolhexa-(3-mercaptopropionat), Di-Pentaerythritolhexamercaptoacetat, Di-Trimethylolpropantetra-(3-mercaptopropionat), Di-Trimethylolpropantetramercaptoacetat sowie deren alkoxylierten, beispielsweise ethoxylierten und/oder propoxylierten, bevorzugt ethoxylierten Produkte. Bevorzugte Verbindungen (C1) bis (C3) sind Pentaerythritoltetra-(3-mercaptopropionat) (PETMP), Pentaerythritoltetramercaptoacetat (PETMA), Di-Pentaerythritoltetra-(3-mercapto-propionat), Di-Pentaerythritoltetramercaptoacetat, Di-Pentaerythritolpenta-(3-mercaptopro-pionat), Di-Pentaerythritolpentamercaptoacetat, Di-Pentaerythritolhexa-(3-mercaptopropionat), Di-Pentaerythritolhexamercaptoacetat, Di-Trimethylolpropantetra-(3-mercaptopropionat), Di-Tri-methylolpropantetramercaptoacetat, besonders bevorzugt sind Pentaerythritoltetra-(3-mer-captopropionat) (PETMP), Pentaerythritoltetramercaptoacetat (PETMA), Di-Pentaerythritolhexa-(3-mercaptopropionat), Di-Pentaerythritolhexamercaptoacetat, Di-Trimethylolpropantetra-(3-mercaptopropionat), Di-Trimethylolpropantetramercaptoacetat und ganz besonders bevorzugt sind Pentaerythritoltetra-(3-mercaptopropionat) (PETMP) und Pentaerythritoltetramercaptoacetat (PETMA).

Optional können die erfindungsgemäßen Beschichtungsmasse mindestens einen Reaktivverdünner (D) enthalten mit einem zahlenmittleren Molekulargewicht $M_n$ von vorzugsweise weniger als 1000, bevorzugt weniger als 750 und besonders bevorzugt weniger als 500 g/mol, der vorzugsweise mindestens zwei (Meth)acrylatgruppen aufweist. Weitere Reaktivverdünner sind z.B. solche mit Epoxidgruppen, insbesondere Glycidylether, sowohl Monoglycidylether als auch Polyglycidylether. Reaktivverdünner sind niedrigviskose, bei Raumtemperatur flüssige Zusätze. Durch die niedrigere Viskosität der Reaktionsharzmasse wird eine bessere Penetration in poröse Werkstoffe (Tränkung von Geweben, Beschichtung von Beton) erreicht oder die Verarbeitbarkeit durch Spritzpressen (z.B. RTM-Verfahren) verbessert. Andererseits erlauben derartige Reaktionsharzmassen eine höhere Beladung mit Füllstoffen, woraus bei der Härtung ein geringerer Volumenschrumpf resultiert. Ebenfalls können die mechanischen Eigenschaften des gehärteten Harzes verbessert werden, ebenso die Ökonomie. Die Reaktivverdünner können mit den Polymeren reagieren und kovalent an das Polymer gebunden werden und können daher dann auch nicht mehr migrieren.

Reaktivverdünner sind z.B. auch (Meth)acrylatmonomere und (Meth)acrylatoligomere wie beispielsweise beta-Carboxyethylacrylat, Butylacrylat, 2-Ethylhexylacrylat, Octylacrylat, Isooctylacrylat, Nonylacrylat, Isononylacrylat, Decyl-Acrylat, Isodecyl-Acrylat, Octyl-Decylacrylat (ODA), Benzylacrylat, Cyclohexylacrylat, t-Butyl-cyclohexylacrylat, Phenoxyethylacrylat, ethoxyliertes Phenoxyethylacrylat, propoxyliertes Phenoxyethylacrylat, Nonyl-Phenoxyethylacrylat, Butoxy-Ethylacrylat, Laurylacrylat, Isobornylacrylat, Dihydrocyclopentadienylacrylat, Tetrahydrofurylacrylat, Ethoxyethylacrylat, Urethanacrylat, Epoxyacrylat, Hexandioldiacrylat (HDDA), Tripropylenglykoldiacrylat, Diethylenglykoldiacrylat (DEGDA), Trimethylolpropantriacrylat (TMPTA), Triethylenglycoldiacrylat (TEGDA), Butandioldiacrylat (BDDA), Dipropylenglycoldiacrylat (DPGDA) und n-Pentanglykol-diacrylat (NPGDA). Weitere Reaktivverdünner sind z.B. Glycidylmethacrylat (GMA), 1,6-Hexandiol-dimethacrylat (HDDMA), Ethylenglycoldimethacrylat (EGD-MA), Propylenglykol dimethacrylat (PGDMA), Cyclohexandimethacrylate, Butandioldimethacrylat, Diethylenglykoldimethacrylat, Triethylenglykoldimethacrylat, Isobornylmethacrylat, Methylmethacrylat (MMA), ethoxyliertes Trimethylolpropantrimethacrylat, und Trimethylolpropantrimethacrylat (TMPTMA) .

Zusätzlich können auch nicht reaktive Verdünnungsmittel (Lösungsmittel) enthalten sein, z.B. in Mengen von 0 bis 5 Gew.%, bezogen auf die Gesamtzusammensetzung. Diese Lösungsmittel weisen vorzugsweise einen hohen Siedepunkt auf. Lösungsmittel sind z.B. Fettsäureester, Xylol, Tetrahydrofuran, Methyl-tert.-butylether, Ethylacetat, Methylethylketon etc.

Die Menge an Verbindung (D) in der härtbaren Zusammensetzung beträgt vorzugsweise von 0 bis 60 Gew.% oder von 0 bis 50 Gew.% oder von 1 bis 50 Gew.% oder von 5 bis 30 Gew.% oder von 10 bis 40 Gew.%.

Bei der mindestens einen, bevorzugt ein bis vier, besonders bevorzugt ein bis drei, ganz besonders bevorzugt ein bis zwei und ganz besonders bevorzugt genau einen strahlungshärtbaren Verbindung (D) mit mindestens 2 Acryloyl- oder Methacryloylgruppen, bevorzugt zwei bis zehn, besonders bevorzugt zwei bis sechs, ganz besonders bevorzugt drei bis vier Acryloyl- oder Methacryloylgruppen, bevorzugt Acryloylgruppen, handelt es sich bevorzugt um (Meth)-acrylsäureester von Polyolen, bevorzugt alkoxylierten Polyolen.

Beispiele für (Meth)acrylsäureester von Polyolen sind Ethylenglykoldiacrylat, 1,2-Propandioldiacrylat, 1,3-Propandioldiacrylat, 1,4-Butandioldiacrylat, 1,3-Butandioldiacrylat, 1,5-Pentandioldiacrylat, 1,6-Hexandioldiacrylat, 1,8-Octandioldiacrylat, Neopentylglykoldiacrylat, 1,1-, 1,2-, 1,3- und 1,4-Cyclohexandimethanoldiacrylat, 1,2-, 1,3- oder 1,4-Cyclohexandioldiacrylat, Trimethylolpropantriacrylat, Ditrimethylolpropanpenta- oder -hexaacrylat, Pentaerythrittri- oder -tetraacrylat, Glycerindi- oder -triacrylat, sowie Di- und Polyacrylate von Zuckeralkoholen, wie beispielsweise Sorbit, Mannit, Diglycerol, Threit, Erythrit, Adonit (Ribit), Arabit (Lyxit), Xylit, Dulcit (Galactit), Maltit oder Isomalt.

Bevorzugt sind (Meth)Acrylate von Verbindungen der Formel (VIIa) bis (VIId),

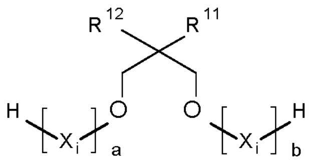

(VIIa)

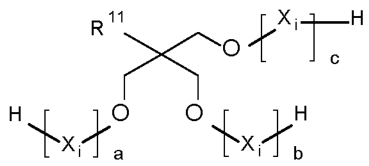

(VIIb)

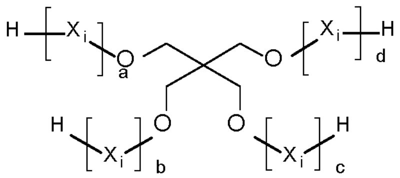

(VIIc)

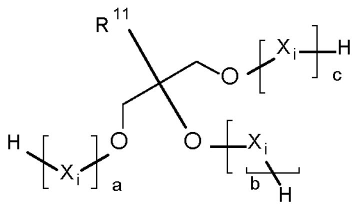

(VIId)

worin

$R^{11}$ und $R^{12}$ unabhängig voneinander Wasserstoff oder gegebenenfalls durch Aryl, Alkyl, Aryloxy, Alkyloxy, Heteroatome und/oder Heterocyclen substituiertes $C_1$ - $C_{18}$-Alkyl,
a, b, c, d unabhängig voneinander je für eine ganze Zahl von 1 bis 10, bevorzugt 1 bis 5 und besonders bevorzugt 1 bis 3 stehen und
jedes $X_i$ für i = 1 bis a, 1 bis b, 1 bis c und 1 bis d unabhängig voneinander ausgewählt sein kann aus der Gruppe $-CH_2-CH_2-O-$, $-CH_2-CH(CH_3)-O-$, $-CH(CH_3)-CH_2-O-$, $-CH_2-C(CH_3)_2-O-$,$-C(CH_3)_2-CH_2-O-$, $-CH_2$-CHVin-O-, -CHVin-$CH_2$-O-, $-CH_2$-CHPh-O- und -CHPh-$CH_2$-O-, bevorzugt aus der Gruppe $-CH_2-CH_2-O-$, $-CH_2-CH(CH_3)-O-$ und $-CH(CH_3)-CH_2-O-$, und besonders bevorzugt $-CH_2-CH_2-O-$,
worin Ph für Phenyl und Vin für Vinyl steht.

Darin bedeuten gegebenenfalls durch Aryl, Alkyl, Aryloxy, Alkyloxy, Heteroatome und/oder Heterocyclen substituiertes $C_1$ - $C_{18}$-Alkyl beispielsweise Methyl, Ethyl, Propyl, Isopropyl, n-Butyl, sec-Butyl, tert.-Butyl, Pentyl, Hexyl, Heptyl, Octyl, 2-Etylhexyl, 2,4,4-Trimethylpentyl, Decyl, Dodecyl, Tetradecyl, Hetadecyl, Octadecyl, 1,1-Dimethylpropyl, 1,1 -Dimethylbutyl, 1,1,3,3-Tetramethylbutyl, bevorzugt Methyl, Ethyl oder n-Propyl, ganz besonders bevorzugt Methyl oder Ethyl.

Besonders bevorzugt handelt es sich dabei um (Meth)Acrylate von nicht oder ein- bis sechsfach ethoxyliertem, propoxyliertem oder gemischt ethoxyliertem und propoxyliertem und insbesondere ausschließlich ethoxyliertem Glycerin, Trimethylolpropan, Ditrimethylolpropan, Trimethylolethan, Pentaerythrit oder Dipentaerythrit. Ganz besonders bevorzugt sind Trimethylolpropantriacrylat, Pentaerythrittetraacrylat, und Acrylate von ein- bis sechsfach alkoxyliertem, besonders bevorzugt ethoxyliertem Trimethylolpropan, Ditrimethylolpropan, Glycerin, Pentaerythrit oder Dipentaerythrit. Ferner kann es sich bei der Verbindungen (D) um Ethylenglykoldiacrylat, 1,2-Propandiol-diacrylat, Dipropylenglycoldiacrylat, Tripropylenglycoldiacrylat, 1,3-Propandioldiacrylat, 1,4-Bu-tandioldiacrylat, 1,3-Butandioldiacrylat, 1,5-Pentandiol-diacrylat, 1,6-Hexandioldiacrylat, 1,8-Oc-tandioldiacrylat, Neopentylglykoldiacrylat, 1,1-, 1,2-, 1,3-und 1,4-Cyclohexandimethanoldiacrylat, 1,2-, 1,3- oder 1,4-Cyclohexandioldiacrylat handeln.

Die erfindungsgemäßen Beschichtungsmassen sind bevorzugt wie folgt zusammengesetzt:

(S) 10 bis 80, bevorzugt 40 bis 75 Gew%,
(S1) und (S2) zusammen 0 bis 80, bevorzugt 10 bis 60 Gew.%,
(C) 10 bis 70, bevorzugt 25 bis 60 Gew%,
(D) 0 bis 60, bevorzugt 5 bis 30 Gew% und
(F) 0 bis 10, bevorzugt 0,1 bis 5 Gew%

mit der Maßgabe, dass die Summe immer 100 Gew% ergibt, wobei die Stöchiometrie von Thiolgruppen in (C) zu Acrylatgruppen in (S), (S1) und (S2) vorzugweise von 0,2:1 bis 3,8:1, oder von 0,8:1 bis 2,5:1 beträgt.

Zur Beschleunigung der Addition der Thiolgruppen der Komponente (C) an die Acrylatgruppen der Komponenten (S), (S1) und (S2) ist bevorzugt mindestens ein Katalysator (E) in der Beschichtungsmasse anwesend. Als Katalysatoren (E) für die Beschleunigung der Additionsreaktion in der Beschichtungsmasse können primäre, sekundäre und tertiäre Amine sowie quaternäre Ammoniumsalze, Imine oder Iminiumsalze eingesetzt werden. Diese können aliphatisch oder aromatisch, bevorzugt aliphatisch sein. Bevorzugt sind tertiäres Amin, beispielsweise Trimethylamin, Triethylamin, Tri-n-butylamin, Ethyl-di-*iso*-Propylamin, Methyl-di-*iso*-Propylamin, N-Methylmorpholin, N-Methylpiperidin, Triethanolamin, N,N-Dimethylethanolamin, N-Methyldicyclohexylamin, Dimethylcyclohexylamin, Diethylcyclohexylamin, Methyldicyclohexylamin, Ethyldicyclohexylamin, 4-N,N-Dimethylamino-pyridin, 1,5-Diazabicyclo[4.3.0]-non-5-en (DBN), 1,8-Diazabicyclo[5.4.0]-undec-7-en (DBU), Tetramethylguanidin, Pyrrocolin, Chinuclidin, 3-Hydroxychinuclidin, Chinidin, bevorzugt 1,4-Di-aza-bicyclo[2,2,2]octan (DABCO), 1,5-Diazabicyclo[4.3.0]-non-5-en (DBN), 1,8-Diazabicy-clo[5.4.0]-undec-7-en (DBU), N-Methyldicyclohexylamin, Chinuclidin, 3-Aminochinuclidin und 3-Hydroxychinuclidin, besonders bevorzugt N-Methyldicyclohexylamin, 3-Aminochinuclidin und 3-Hydroxychinuclidin.

Der Katalysator wird vorzugsweise in Mengen von 0,1 bis 15 Gew% bzgl. der Summe aus (S) und (C) eingesetzt, bevorzugt 0,2 - 10, besonders bevorzugt 0,5 - 8 und ganz besonders bevorzugt 1 bis 5 Gew%.

Weiterhin können die härtbaren Zusammensetzungen optional mindestens einen Photoinitiator (F) und/oder optional weitere für die jeweilige Anwendung typische Additive enthalten. Die Menge an Photoinitiator (F) in der härtbaren Zusammensetzung beträgt z.B. von 0 bis 10 Gew.% oder von 0,1 bis 8 Gew.%, vorzugsweise von 0,1 bis 5 Gew.% oder von 0,1 bis 2 Gew.%.

Photoinitiatoren (F) können beispielsweise dem Fachmann bekannte Photoinitiatoren sein, z.B. solche in "Advances in Polymer Science", Volume 14, Springer Berlin 1974 oder in K. K. Dietliker, Chemistry and Technology of UV- and EB-Formulation for Coatings, Inks and Paints, Volume 3; Photoinitiators for Free Radical and Cationic Polymerization, P. K. T. Oldring (Eds), SI-TA Technology Ltd, London, genannten. In Betracht kommen z.B. Mono- oder Bisacylphosphinoxide, wie sie z.B. in EP-A 7 508, EP-A 57 474, DE-A 196 18 720, EP-A 495 751 oder EP-A 615 980 beschrieben sind, beispielsweise 2,4,6-Trimethylbenzoyldiphenylphosphinoxid (Lucirin® TPO der BASF SE), Ethyl-2,4,6-tri-methylbenzoylphenylphosphinat (Lucirin® TPO L der BASF SE), Bis-(2,4,6-trimethylbenzoyl)-phenylphosphinoxid (Irgacure® 819 der Firma BASF SE), Benzophenone, Hydroxyacetophenone, Phenylglyoxylsäure und ihre Derivate oder Gemische dieser Photoinitiatoren. Als Beispiele seien genannt Benzophenon, Acetophenon, Aceton-aphthochinon, Methylethylketon, Valerophenon, Hexanophenon, $\alpha$-Phenylbutyrophenon,
p-Morpholinopropiophenon, Dibenzosuberon, 4-Morpholinobenzophenon, 4-Morpholinodeoxybenzoin, p-Diacetylbenzol, 4-Aminobenzophenon, 4'-Methoxyacetophenon, $\beta$-Methylanthrachinon, *tert*-Butylanthrachinon, Anthrachinoncarbonsäureester, Benzaldehyd, $\alpha$-Tetralon, 9-Acetylphenanthren, 2-Acetylphenanthren, 10-Thioxanthenon, 3-Acetylphenanthren, 3-Acetylindol, 9-Fluorenon, 1-Indanon, 1,3,4-Triacetyl-benzol, Thioxanthen-9-on, Xanthen-9-on, 2,4-Dimethylthioxanthon, 2,4-Diethyl-thioxanthon, 2,4-Di-*iso*-propylthioxanthon, 2,4-Dichlorthioxanthon, Benzoin, Benzoin-*iso*-butylether, Chloroxanthenon, Benzoin-tetrahydropyranylether, Benzoin-methylether, Benzoinethyl-ether, Benzoinbutylether, Benzoin-*iso*-propylether, 7H-Benzoin-methylether, Benz[de]an-thracen-7-on, 1-Na-phthaldehyd, 4,4'-Bis(dimethylamino)benzophenon, 4-Phenylben-zophenon, 4-Chlorbenzo-phenon, Michlers Keton, 1-Acetonaphthon, 2-Acetonaphthon, 1-Benzoylcyclo-hexan-1-ol, 2-Hy-droxy-2,2-dimethylacetophenon, 2,2-Di-methoxy-2-phenylacetophenon, 2,2-Diethoxy-2-phenyl-acetophenon, 1,1-Dichloracetophenon, 1-Hydroxyacetophenon, Acetophenondimethylketal, o-Methoxybenzophenon, Triphenylphosphin, Tri-o-Tolylphosphin, Benz[a]anthracen-7,12-dion, 2,2-Diethoxyacetophenon, Benzilketale, wie Benzildimethylketal, 2-Methyl-1-[4-(methylthio)phe-nyl]-2-morpholinopropan-1-on, Anthrachinone wie 2-Methylanthrachinon, 2-Ethylanthrachinon, 2-*tert*-Butylanthrachinon, 1-Chloran-thrachinon, 2-Amylanthrachinon und 2,3-Butandion. Geeignet sind auch nicht- oder wenig vergilbende Photoinitiatoren vom Phenylglyoxalsäureestertyp, wie in DE-A 198 26 712, DE-A 199 13 353 oder WO 98/33761 beschrieben. Bevorzugt unter diesen Photoinitiatoren sind 2,4,6-Trimethylbenzoyldiphenylphosphinoxid, Ethyl-2,4,6-trimethylbenzoylphenylphosphinat, Bis-(2,4,6-trimethylbenzoyl)-phenylphosphinoxid, Benzophenon, 1-Benzoylcyclohexan-1-ol, 2-Hydroxy-2,2-dimethylacetophenon und 2,2-Di-methoxy-2-phenylacetophenon.

Ein Gegenstand der Erfindung ist auch die Herstellung von Formkörpern aus der erfindungsgemäßen gehärteten Zusammensetzung. Dabei wird in einer bevorzugten Ausführungsform die erfindungsgemäße Zusammensetzung mittels VARTM-Technologie in die Form für die Aushärtung zum Formkörper eingebracht.

Ein weiterer Gegenstand der vorliegenden Erfindung ist die gehärtete Zusammensetzung, die erhältlich ist oder erhalten wird durch Aushärtung der erfindungsgemäßen Zusammensetzung. Hierfür werden die erfindungsgemäßen Zusammensetzungen entweder in spezielle Formen eingefüllt oder auf Oberflächen aufgetragen und durch Temperaturerhöhung zur Aushärtung gebracht. In der Zusammensetzung, insbesondere für eine Auftragung auf Oberflächen, können noch weitere Füllstoffe enthalten sein. Diese Füllstoffe sind ausgewählt aus der Gruppe der Thixotropiermittel (z.B. hydrophile und hydrophobe pyrogene Kieselsauren), UV-Stabilisatoren (z.B. nanoskalige Oxide wie Titandioxid und Zinkoxid), Flammschutzmittel (z.B. Polyphosphate und Phosphor), Silicate und Carbonate zur Verbesserung der mechanischen Eigenschaften. Diese Füllstoffe können sowohl in den Komponenten (a) und/oder (b) und/oder in der Thiol-Härterkomponente (c) enthalten sein. Sie können aber auch als separate Komponente der erfindungsgemäßen Zusammensetzung hinzugemischt werden.

Die eingesetzten Formen, in die die erfindungsgemäße Zusammensetzung eingeführt wird, können faserverstärkendes Material oder aber Elemente enthalten, die vor Umwelteinflüssen wie Nasse, Sauerstoff, Staubkörnern oder anderen aggressiven Materialien oder Einflüssen geschützt werden müssen.

Nach Härtung der erfindungsgemäßen Zusammensetzung erhält man gehärtete Harze, die sowohl innerhalb einer Form als auch frei außerhalb jeglicher Formen hergestellt werden können. Bevorzugte gehärtete Harze sind solche, die in einem Formteil ausgehärtet sind. Diese Formteile sind ausgewählt aus der Gruppe von Formteilen für Kraftfahrzeuge, Flugzeuge, Schiffe, Boote, Sportartikel und Rotorenflügeln für Windkraftanlagen. Diese Formteile können sowohl mit als auch ohne ein faserverstärkendes Material ausgelegt sein und/oder die erfindungsgemäße Zusammensetzung kann noch faserverstärkende Materialien enthalten. Die faserverstärkenden Materialien können z.B. Gewebe, uni- oder multiaxiale Gelege, Vliese und Kurzfasern aus folgenden Fasermaterialien sein: Glasfasern, Carbonfasern, Aramidfasern, PE-Fasern (Dyneema) oder Basaltfasern. Bevorzugt sind Gewebe und Uni- und Multiaxialgelege aus Glasfasern und Kohlefasern. Bei großen Bauteilen, die faserverstärkt sind, sind die Bauteile bevorzugt mit dem faserverstärkendem Material ausgelegt. Besonders bevorzugt sind Uni- und Multiaxialgelege aus Glasfasern.

Es stellt einen Vorteil der vorliegenden Erfindung dar, dass die härtbaren Zusammensetzungen bei Raumtemperatur nicht oder nur sehr langsam aushärten und ein stufenförmiges Aushärteprofil zeigen und deshalb in Spritzgussverfahren vorteilhaft eingesetzt werden können.

Sie können insbesondere zur Herstellung von Polymerverbundwerkstoffen auf Basis von Reaktivharzen verwendet werden. Polymerverbundwerkstoffe sind z.B. Faserverbundwerkstoffe wie z.B. Glasfaserverbundwerkstoffe oder Carbonfaserverbundwerkstoffe. Gegenstand der Erfindung sind daher auch derartige Polymerverbundwerkstoffe, insbesondere Faserverbundwerkstoffe, hergestellt unter Verwendung der erfindungsgemäß einzusetzenden härtbaren Zusammensetzungen.

Prozesse zur Herstellung solcher Komposite sind: Spritzgießen, Spritzprägen, Fließpressen, Reaktivspritzguss (Reaction Injection Moulding = RIM), Infusionstechniken wie RTM (Resin Transfer Moulding), VARTM (Vacuum Assisted RTM), Tape-Lageverfahren, Wickeltechniken insbesondere Coil Coating, Filament Winding, Handlaminieren und Pultrusion. Sie können auch generell angewendet werden als temperaturaushärtbares Reaktivharz mit gutem Aushärteprofil ("Snap Cure") und mit hervorragenden Haftungseigenschaften für z.B. Heiß-Reaktivklebstoffe (Automotive: geringe Zykluszeiten), heißaushärtende Beschichtungen, etc.

Neben den Komponenten (S), (C), (D) sowie optional (E) und (F) kann die erfindungsgemäße Zusammensetzung zusätzliche weitere Komponenten enthalten. Dies können unter anderem die folgenden Hilfs- und Zusatzstoffe sein: Füllstoffe, Thixotropiermittel (z.B. hydrophile und hydrophobe pyrogene Kieselsauren), UV-Stabilisatoren (z.B. nanoskalige Oxide wie Titandioxid und Zinkoxid), Flammschutzmittel (z.B. Polyphosphate und Phosphor), Silicate und Carbonate zur Verbesserung der mechanischen Eigenschaften.

Vor der Applikation sind die erfindungsgemäß einzusetzenden Zusammensetzungen durch Vermischen zumindest der Komponenten (S) und (C), sowie optional zusätzlich der Komponenten (S1), (S2), (D) und/oder (F) sowie optional weiterer Additiven erhältlich. Dabei kann es sinnvoll sein, die optionalen Komponenten (D) und/oder (F) und/oder weitere Additive vor dem Vermischen bereits in eine der Komponenten (S) und (C) einzumischen, so dass man diese als Master Batch Formulierung vorhalten kann. In diesem Fall verringert sich die Herstellung der erfindungsgemäßen Beschichtungsmassen auf das Vermischen zweier Komponenten. Es ist auch möglich, alle Komponenten mit Ausnahme des Katalysators (E) miteinander zu vermischen und die Härtung dann durch Zugabe und Untermischung des Katalysators (E) zu starten.

Nach dem Vermischen der Komponenten bzw. Zugabe des Katalysators (E) hat die Zusammensetzung eine Topfzeit von vorzugsweise mehr als 4 Stunden bei Raumtemperatur. Topfzeit bedeutet diejenige Zeit, innerhalb der die Zusammensetzung nicht aushärtet und noch ausreichend fließfähig ist in Bezug auf deren Anwendung (z.B. Spritzgießen, RTM, Heißverkleben).

Eine Strahlungshärtung kann mit energiereichem Licht erfolgen, z.B. UV-Licht oder Elektronenstrahlen. Die Strahlungshärtung kann bei höheren Temperaturen erfolgen. Bevorzugt ist dabei eine Temperatur oberhalb der $T_g$ des strahlungshärtbaren Bindemittels. Als Strahlungsquellen für die Strahlungshärtung geeignet sind z.B. Quecksilber-Niederdruckstrahler, Mitteldruckstrahler, Hochdruckstrahler sowie Leuchtstoffröhren, Impulsstrahler, Metallhalogenidstrahler, Elektronenblitzeinrichtungen, wodurch eine Strahlungshärtung ohne Photoinitiator möglich ist, oder Excimerstrahler. Die Strahlungshärtung erfolgt durch Einwirkung energiereicher Strahlung, also UV-Strahlung oder Tageslicht, vorzugsweise Licht im Wellenlängenbereich von $\lambda$=200 bis 700 nm strahlt, besonders bevorzugt von $\lambda$=200 bis 500 nm und ganz besonders bevorzugt $\lambda$=250 bis 400 nm, oder durch Bestrahlung mit energiereichen Elektronen (Elektronenstrahlung; 150 bis 300 keV). Als Strahlungsquellen dienen beispielsweise Hochdruckquecksilberdampflampen, Laser, gepulste Lampen (Blitzlicht), LED-Lampen, Halogenlampen oder Excimerstrahler. Die üblicherweise zur Vernetzung ausreichende Strahlungsdosis bei UV-Härtung liegt im Bereich von 80 bis 3000 $mJ/cm^2$. Selbstverständlich sind auch mehrere Strahlungsquellen für die Härtung einsetzbar, z.B. zwei bis vier. Diese können auch in jeweils unterschiedlichen Wellenlängebereichen strahlen. Die Bestrahlung kann optional auch unter Ausschluss von Sauerstoff, z. B. unter Inertgas-Atmosphäre, durchgeführt werden. Als Inertgase eignen sich vorzugsweise Stickstoff, Edelgase, Kohlendioxid, oder

Verbrennungsgase. Des Weiteren kann die Bestrahlung erfolgen, indem die Beschichtungsmasse mit transparenten Medien abgedeckt wird. Transparente Medien sind z. B. Kunststofffolien, Glas oder Flüssigkeiten, z. B. Wasser. Besonders bevorzugt ist eine Bestrahlung in der Weise, wie sie in der DE-A1 199 57 900 beschrieben ist.

Es stellt einen Vorteil der erfindungsgemäß einzusetzenden Zusammensetzungen dar, dass sie auch bei Härtung in einer sauerstoffhaltigen Atmosphäre ähnlich gute Beschichtungseigenschaften ergeben, wie bei Härtung unter einer Inertatmosphäre.

In dieser Schrift verwendete ppm- und Prozentangaben beziehen sich, falls nicht anders angegeben, auf Gewichtsprozente und -ppm.

Die folgenden Beispiele sollen die Erfindung erläutern, aber nicht auf diese Beispiele einschränken.

Beispiele

Beispiel 1: Herstellung des erfindungsgemäßen Bindemittels, Harz A

DABCO (1,4-Diazabicyclo[2.2.2]octan; 0.0375 mol; 4.2065 g) wurde zu einer Suspension von 1,4-Butanedioldiacrylat (0.900 mol; 178.3942 g) und Isophthalaldehyd (0.750 mol; 100.5990 g) in THF (150 ml) zugegeben. Das erhaltene Gemisch wurde für 48 h bei 50°C gerührt und anschließend THF im Vakuum entfernt. Der Rückstand wurde in Ethylacetat aufgenommen und mit 10%iger HCl gewaschen. Die organische Fraktion wurde über $MgSO_4$ getrocknet und das Lösungsmittel im Vakuum entfernt (80 °C, 1 mbar). Das Produkt wurde in Form einer viskosen, klaren, und farblosen Flüssigkeit erhalten.

Beispiel 2 (Vergleich), Harz B

DABCO (0,075 mol; 8,413 g) wurde einer Suspension von 1,4-Butandioldiacrylat (1,800 mol; 356,788 g) und Terephthalaldehyd (1,500 mol; 201,198 g) in Tetrahydrofuran (THF, 300 mL) hinzugefügt. Das resultierende Gemisch wurde für 48h bei 60°C gerührt. Im Anschluss daran wurde THF im Vakuum entfernt. Das übriggebliebene Gemisch wurde in Ethylacetat aufgenommen und mit 10%iger HCl gewaschen um die Reste des Katalysators zu entfernen. Die organische Fraktion wurde dann über Magnesiumsulfat ($MgSO_4$) getrocknet, filtriert und das Lösungsmittel im Vakuum entfernt. Zur weiteren Aufreinigung wurde das Gemisch für 12h bei 80°C und 1 mbar behandelt.

Gelpermeationschromatographie (GPC) in THF mit PMMA-Standard ergab ein $M_w$ von 1100 g/mol und ein $M_n$ von 910 g/mol. Das Produkt war eine klare, gelb gefärbte viskose Flüssigkeit.

Beispiel 3: Aushärtung

9 g Harz A = Komponente 1 (Bindemittel)

10.4 g Pentaerythritol-tetrakis-(3-mercapto-propionat) (Vernetzer) gemischt mit 170 mg PC-Kat® NP112 (N-Methyldicyclohexylamin, Katalysator) = Komponente 2

Komponente 1 und 2 wurden gemischt.

Für >16 h bei Raumtemperatur wurde keine Aushärtung festgestellt (lange Topfzeit).

Bei 70°C erfolgt eine schlagartige Aushärtung ("Snap Cure") in weniger als 1 h.

Es ergibt sich ein festes, transparentes, klares und farbloses Material mit einer Shore-Härte von 88 A und 56 D.

Beispiel 4: Vergleichsbeispiel

9 g Harz B = Komponente 3 (Bindemittel)

10,4 g Pentaerythritol-tetrakis-(3-mercapto-propionat) (Vernetzer) gemischt mit 80 mg N-Methyldicyclohexylamin (Katalysator) = Komponente 4

Komponente 3 wurde mit Komponente 4 gemischt.

Nach 2 h klebfreie Aushärtung bei Raumtemperatur mit einer Shore A Härte von 76.

Bei Verwendung von 170 mg anstelle von 80 mg Katalysator erfolgt die klebfreie Durchhärtung bei Raumtemperatur in einer stark exothermen Reaktion bereits innerhalb von 20 Minuten. Dabei bildet sich eine unregelmäßige Oberfläche mit vielen unerwünschten Blasen.

Als Resultat führt der Einsatz des erfindungsgemäßen Systems zu einer verlängerten Topfzeit mit zweistufigem Aushärteprofil, während das Vergleichsbeispiel bereits nach kurzer Zeit bei Raumtemperatur aushärtet.

Beispiel 5

Es wird eine Mischung vorgelegt aus 201 g (1,5 mol) Isophthalaldehyd, 148 g (0,5 mol) Trimethylolpropantriacrylat, 192 g (1,5 mol) Butylacrylat und 3,74 g (0,0333 mol) DABCO. Die Mischung wird für 48 Stunden bei 60 °C gerührt.
Das Produkt ist leicht viskos

Gelpermeationschromatographie (THF): Mn = 680; Mw = 1220;
Polydispersität 1,8

Beispiel 6 Aushärtung

Die Aushärtung erfolgte mit den in Tabelle 1 genannten Komponenten unter Verwendung des aus Beispiel 5 noch vorhandenen Katalysators.
Die Aushärtung kann bei 70°C in 5 bis 60 Minuten (typischerweise in 30 Minuten) oder bei 120 °C in 1 bis 5 Minuten erfolgen.
Die ausgehärteten Produkte hatten die in Tabelle 1 wiedergegebenen Glasübergangstemperaturen.

Tabelle 1

| | Polymer aus Bsp. 5 [g] | BADGE [g] | PE-SH | TMP-SH | Tg [°C] |
|---|---|---|---|---|---|
| 6A | 10 | - | 10 | - | 50,0 |
| 6B | 10 | - | - | 10 | 40,3 |
| 6C | 10 | 10 | 10 | - | 21,5 |
| 6D | 10 | 10 | - | 10 | |

Tg: Glasübergangstemperatur, bestimmt durch Differential Scanning Calorimetrie (ASTM 3418/82, sog. "midpoint temperature")
BADGE: Bisphenol-A-diglycidylether
PE-SH: Pentaerythritol-tetrakis-(3-mercapto-propionat)
TMP-SH: Trimethylolpropan-tris-(3-mercapto-propionat)

Beispiel 7

Es wird eine Mischung vorgelegt aus 134 g (1 mol) Isophthalaldehyd, 396 g (2 mol) Butandioldiacrylat und 8,98 g (0,08 mol) DABCO. Die Mischung wird für 48 Stunden bei 60 °C gerührt. Das Produkt ist viskos.

Gelpermeationschromatographie (THF): Mn = 770; Mw = 1330;
Polydispersität 1,73

Beispiel 8

80 g des Produktes aus Beispiel 7 wurden mit 1,44 g Benzoesäure versetzt und bei 60 °C für 3h gerührt.

Beispiel 9

150 g des Produktes aus Beispiel 7 wurden mit 1,35 g Benzoesäure versetzt und bei 60 °C für 2h gerührt.

Beispiel 10 Aushärtung

Die Aushärtung erfolgte mit den in Tabelle 2 genannten Komponenten unter Verwendung des aus den Beispielen 7 bis 9 jeweils noch vorhandenen Katalysators.
Die Aushärtung kann bei 70°C in 5 bis 60 Minuten (typischerweise in 30 Minuten) oder bei 120 °C in 1 bis 5 Minuten erfolgen.
Die ausgehärteten Produkte hatten die in Tabelle 2 wiedergegebenen Glasübergangstemperaturen.

Tabelle 2

| | Polymer aus Bsp. 7 [g] | Polymer aus Bsp. 8 [g] | Polymer aus Bsp. 9 [g] | PE-SH | TMP-SH | Tg [°C] |
|---|---|---|---|---|---|---|
| 10A | 10 | - | - | 10 | - | 38,0 |
| 10B | 10 | - | - | 8 | - | 45,8 |
| 10C | 10 | - | - | - | 10 | 25,2 |
| 10D | 10 | - | - | - | 8 | 16,5 |
| 10E | - | 10 | - | 10 | - | 26,1 |
| 10F | - | 10 | - | 8 | - | 17,3 |
| 10G | - | - | 10 | 10 | - | 35,3 |
| 10H | - | - | 10 | 8 | - | 22,2 |
| 10I | - | - | 10 | - | 10 | 11,7 |

**Patentansprüche**

1. Verfahren zur Härtung von härtbaren Zusammensetzungen, wobei

   - mindestens eine durch Erwärmung härtbare Zusammensetzung zur Verfügung gestellt wird und
   - durch Erwärmen auf Temperaturen von größer oder gleich 60 °C eine Aushärtung der Zusammensetzung bewirkt wird,

   wobei die härtbare Zusammensetzung mindestens folgende Bestandteile enthält

   (a) mindestens ein Polymer (S) erhältlich durch Reaktion mindestens einer Verbindung mit zwei Aldehydgruppen und mindestens einer Acrylatverbindung (B), ausgewählt aus der Gruppe bestehend aus Acrylatverbindungen mit mehr als zwei Acrylatgruppen (By) und Diacrylatverbindungen (B2),
   wobei die mindestens eine Verbindung mit zwei Aldehydgruppen ein aromatischer Dialdehyd ist mit auf die Bindungen der beiden Aldehydgruppen bezogener gewinkelter Molekülstruktur,
   (b) optional mindestens eine nicht-polymere Verbindung, ausgewählt aus Verbindungen (S1) mit einer $\alpha$-(1'-Hydroxyalkyl)acrylatgruppe und Verbindungen (S2) mit zwei oder mehr $\alpha$-(1'-Hydroxyalkyl)acrylatgruppen,
   (c) mindestens eine Verbindung (C), die mindestens zwei Thiolgruppen trägt,
   (d) optional mindestens einen Reaktivverdünner (D) mit einem zahlenmittleren Molekulargewicht $M_n$ von vorzugsweise weniger als 1000 g/mol, der vorzugsweise mindestens zwei (Meth)acrytatgruppen aufweist,
   (e) optional mindestens einen Katalysator (E), der die Anlagerung von Thiolgruppen an Acrylatgruppen zu beschleunigen vermag, und
   (f) optional mindestens einen Photoinitiator (F).

2. Verfahren gemäß Anspruch 1, **dadurch gekennzeichnet, dass** die härtbare Zusammensetzung bei Raumtemperatur innerhalb von 4 h eine Viskositätserhöhung von weniger als 100000 mPa s zeigt.

3. Verfahren gemäß einem der vorhergehenden Ansprüche, **dadurch gekennzeichnet, dass** die Verbindung mit zwei oder mehr Aldehydgruppen ausgewählt ist aus Phthalaldehyd, Isophthalaldehyd und deren Gemisch, wobei weitere Carbonylverbindungen, insbesondere Terephthalaldehyd und/oder Benzaldehyd zur Herstellung des Polymers (S) mitverwendet werden können.

4. Verfahren gemäß einem der vorhergehenden Ansprüche, **dadurch gekennzeichnet, dass** es sich bei den Diacrylatverbindungen (B2) um difunktionelle Acrylate von Alkandiolen, Cycloalkandiolen, niederen Polyalkylenglykolen oder Diaminen handelt und dass die Acrylatverbindungen (By) ausgewählt sind aus der Gruppe bestehend aus Polyetheracrylaten, Polyesteracrylaten, acrylierten Polyacrylatolen, Urethanacrylaten und Acrylsäureestern von optional alkoxylierten Polyolen.

5. Verfahren gemäß einem der vorhergehenden Ansprüche, **dadurch gekennzeichnet, dass** die Acrylatverbindungen (By) und (B2) ausgewählt sind aus der Gruppe bestehend aus Ethylenglykoldiacrylat, 1,2-Propandioldiacrylat, 1,3-Propandioldiacrylat, 1,3-Butandioldiacrylat, 1,4-Butandioldiacrylat, 1,5-Pentandioldiacrylat, 1,6-Hexandioldiacrylat, 1,8-Octandioldiacrylat, Neopentylglykoldiacrylat, 1,1-Cyclohexandimethanoldiacrylat, 1,2-Cyclohexandimethanoldiacrylat, 1,3-Cyclohexandimethanoldiacrylat, 1,4-Cyclohexandimethanoldiacrylat, 1,2-Cyclohexandioldiacrylat, 1,3-Cyclohexandioldiacrylat, 1,4-Cyclohexandioldiacrylat, Diethylenglykoldiacrylat, Dipropylenglykoldiacrylat, Tripropylenglykoldiacrylat, N,N'-Bisacryloyl-2,2-diaminoethan, N,N'-Bisacryloyl-1,6-diaminohexan, N,N'-Bis-acryloylpiperazin, Trimethylolpropantriacrylat, Ditrimethylolpropanpentaacrylat, Ditrimethylolpropanhexaacrylat, Pentaerythrittriacrylat, Pentaerythrittetraacrylat, Glycerindiacrylat, Glycerintriacrylat, Di- oder Polyacrylate von Zuckeralkoholen, wie beispielsweise Sorbit, Mannit, Diglycerol, Threit, Erythrit, Adonit (Ribit), Arabit (Lyxit), Xylit, Dulcit (Galactit), Maltit oder Isomalt, Di- oder Polyacrylate von Polyesterpolyolen, Di- oder Polyacrylate von Polyetherolen, Di- oder Polyacrylate von Poly-THF mit einer Molmasse zwischen 162 und 2000, Di- oder Polyacrylate von Poly-1,3-propandiol mit einer Molmasse zwischen 134 und 1178, Di- oder Polyacrylate von Polyethylenglykol mit einer Molmasse zwischen 106 und 898, sowie Urethandi- oder -polyacrylate und Polycarbonatdi- oder -polyacrylate.

6. Verfahren gemäß einem der vorhergehenden Ansprüche, **dadurch gekennzeichnet, dass** die Acrylatverbindung eine Diacrylatverbindung (B2) ist und ausgewählt ist aus der Gruppe bestehend aus Ethylenglykoldiacrylat, 1,2-Propandioldiacrylat, 1,3-Propandioldiacrylat, 1,4-Butandioldiacrylat und 1,6-Hexandiol-diacrylat.

7. Verfahren gemäß einem der vorstehenden Ansprüche, **dadurch gekennzeichnet, dass** es sich bei den Verbindungen (C) mit mindestens zwei Thiolgruppen um Verbindungen (C1) der Formel

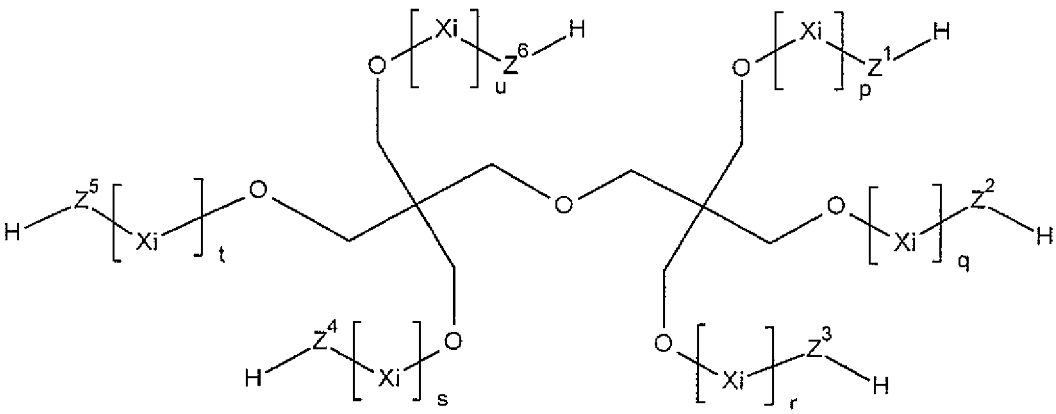

oder um Verbindungen (C2) der Formel

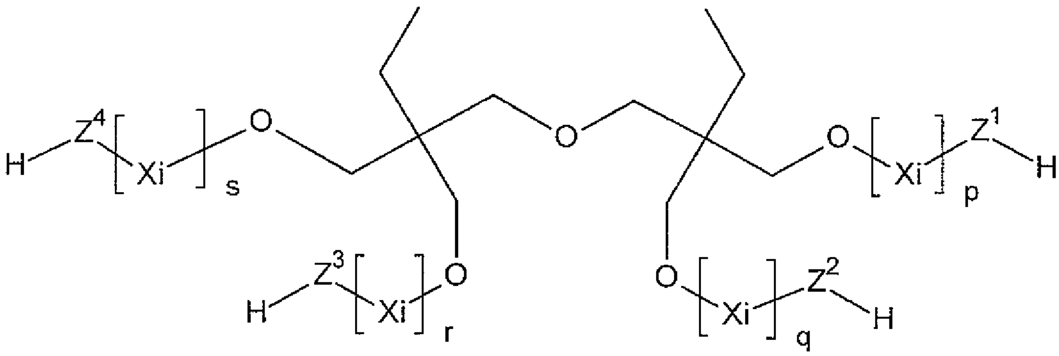

oder um Verbindungen (C3) der Formel

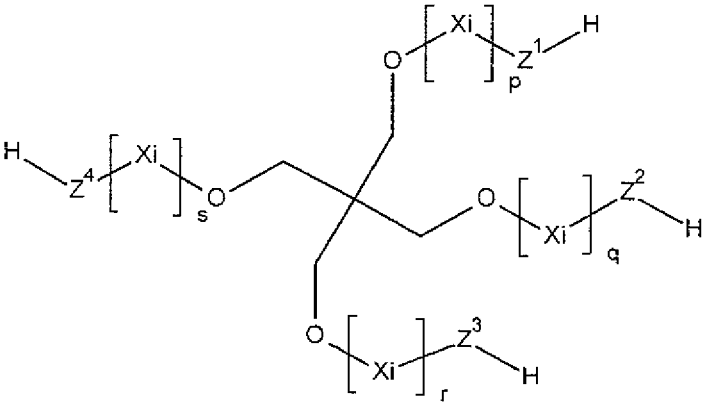

handelt, worin

$Z^1$, $Z^2$, $Z^3$, $Z^4$, $Z^5$ und $Z^6$ jeweils unabhängig voneinander eine Einfachbindung oder einen Rest der Formel $-(C=O)-R^3-S-$,
$R^3$ einen zweiwertigen $C_1$- bis $C_6$-Alkylenrest,
p, q, r, s, t, u, jeweils unabhängig voneinander Null oder eine positive ganze Zahl von 1 bis 5, bevorzugt Null oder eine positive ganze Zahl von 1 bis 4 und besonders bevorzugt Null oder eine positive ganze Zahl von 1 bis 3 und ganz besonders bevorzugt Null,
jedes $X_i$ für i = 1 bis p, 1 bis q, 1 bis r, 1 bis s, 1 bis t und 1 bis u, unabhängig voneinander ausgewählt sein kann aus der Gruppe bestehend
aus $-CH_2-CH_2-O-$, $-CH_2-CH(CH_3)-O-$, $-CH(CH_3)-CH_2-O-$, $-CH_2-C(CH_3)_2-O-$, $-C(CH_3)_2-CH_2-O-$, $-CH_2-CHVin-O-$, $-CHVin-CH_2-O-$, $-CH_2-CHPh-O-$ und $-CHPh-CH_2-O-$, bevorzugt aus der Gruppe $-CH_2-CH_2-O-$, $-CH_2-CH(CH_3)-O-$ und $-CH(CH_3)-CH_2-O-$, und besonders bevorzugt $-CH_2-CH_2-O-$
worin Ph für Phenyl und Vin für Vinyl steht,
mit der Maßgabe, dass im Fall der Verbindungen (C1) mindestens vier, bevorzugt mindestens fünf und besonders bevorzugt alle sechs der Reste $Z^1$ bis $Z^6$ eine Gruppe der Formel $-(C=O)-R^3-S-$ darstellen und im Fall der Verbindungen (C2) und (C3) mindestens drei, bevorzugt alle vier Reste $Z^1$ bis $Z^4$ eine Gruppe der Formel $-(C=O)-R^3-S-$ darstellen.

**8.** Verfahren gemäß einem der Ansprüche 1 bis 5, **dadurch gekennzeichnet, dass** es sich bei den Verbindungen (C) mit mindestens zwei Thiolgruppen um Verbindungen (C4) der Funktionalität zwei oder drei der Formel

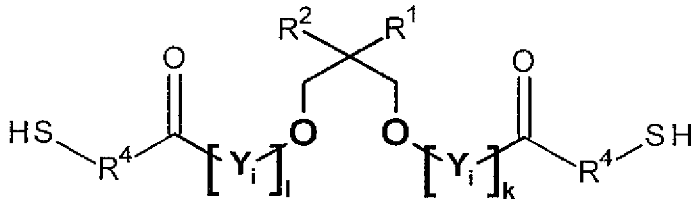

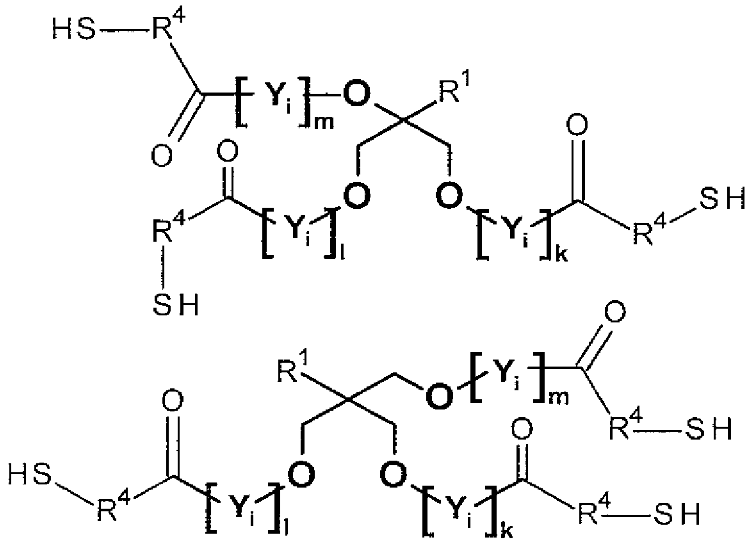

handelt, worin

$R^1$, $R^2$ jeweils unabhängig voneinander Wasserstoff oder einen $C_1$- bis $C_4$-Alkylrest,
$R^4$ Methylen oder 1,2-Ethylen,
k, l, m, n, jeweils unabhängig voneinander Null oder eine positive ganze Zahl von 1 bis 5, bevorzugt Null oder eine positive ganze Zahl von 1 bis 4 und besonders bevorzugt Null oder eine positive ganze Zahl von 1 bis 3,
jedes $Y_i$ für i = 1 bis k, 1 bis l, 1 bis m und 1 bis n, unabhängig voneinander ausgewählt sein kann aus der Gruppe bestehend
aus $-CH_2-CH_2-O-$, $-CH_2-CH(CH_3)-O-$, $-CH(CH_3)-CH_2-O-$, $-CH_2-C(CH_3)_2-O-$, $-C(CH_3)_2-CH_2-O-$, $-CH_2$-CHVin-O-, -CHVin-$CH_2$-O-, $-CH_2$-CHPh-O- und -CHPh-$CH_2$-O-, bevorzugt aus der Gruppe $-CH_2-CH_2-O-$, $-CH_2-CH(CH_3)-O-$ und $-CH(CH_3)-CH_2-O-$, und besonders bevorzugt $-CH_2-CH_2-O-$ worin Ph für Phenyl und Vin für Vinyl steht.

**9.** Verfahren gemäß einem der vorstehenden Ansprüche, **dadurch gekennzeichnet, dass** Verbindung (C) ausgewählt ist aus der Gruppe bestehend aus Ethylenglykoldi-(3-mercaptopropionat) (GDMP), Trimethylolpropan tri-(3-mercaptopropionat) (TMPMP), Trimethylolpropan trimercaptoacetat (TMPMA), 3-Mercaptopropionsäureester von Poly-1,2-propylenglykol der Molmasse 500 bis 2500 g/mol oder 3-Mercaptopropionsäure-ester von ethoxyliertem Trimethylolpropan der Molmasse bis zu 1500 g/mol, Pentaerythritoltetra-(3-mercap-topropionat) (PETMP), Pentaerythritoltetramercaptoacetat (PETMA), Di-Pentaerythritol-tetra-(3-mercaptopropionat), Di-Pentaerythritoltetramercaptoacetat, Di-Pentaerythritol-penta-(3-mercaptopropionat), Di-Pentaerythritolpentamercaptoacetat, Di-Pentaerythritol-hexa-(3-mercaptopropionat), Di-Pentaerythritolhexamercaptoacetat, Di-Trimethylolpropan-tetra-(3-mercaptopropionat), Di-Trimethylolpropantetramercaptoacetat sowie deren alkoxylierten, beispielsweise ethoxylierten und/oder propoxylierten, bevorzugt ethoxylierten Produkte.

**10.** Verfahren gemäß einem der vorstehenden Ansprüche, **dadurch gekennzeichnet, dass** der Katalysator (E) ausgewählt ist aus der Gruppe bestehend aus primären, sekundären und tertiären Aminen, primären, sekundären und tertiären Phosphinen, quaternären Ammonium- oder Phosphoniumsalze, Iminen und Iminiumsalzen.

**11.** Verfahren gemäß einem der vorstehenden Ansprüche, **dadurch gekennzeichnet, dass** es sich um ein Verfahren handelt ausgewählt aus der Gruppe bestehend aus Spritzgießen, Spritzprägen, Fließpressen, Reaktivspritzguss (Reaction Injection Moulding = RIM), RTM (Resin Transfer Moulding), VARTM (Vacuum Assisted RTM), Tape-Lageverfahren, Coil Coating, Filament Winding, Handlaminieren, Pultrusion, Heiß-Reaktivkleben und heißaushärtenden Beschichtungen.

**12.** Verfahren gemäß einem der vorstehenden Ansprüche, **dadurch gekennzeichnet, dass** die härtbare Zusammensetzung die folgenden Bestandteile enthält

(a) 10 bis 80 Gew.% des Polymers (S)
(b) zusammen 0 bis 80 Gew.% der Verbindungen (S1) und (S2)

(c) 10 bis 70, bevorzugt 25 bis 60 Gew.% der Verbindung (C),
(d) 0 bis 60, bevorzugt 5 bis 30 Gew.% des Reaktivverdünners (D),
(f) 0 bis 10, bevorzugt 0,1 bis 5 Gew.% Fotoinitiator (F)

mit der Maßgabe, dass die Summe immer 100 Gew.% ergibt, wobei die Stöchiometrie von Thiol-gruppen in (C) zu Acrylatgruppen in (S), (S1) und (S2) vorzugweise von 0,2:1 bis 3,8:1, oder von 0,8:1 bis 2,5:1 beträgt.

**13.** Verfahren gemäß einem der vorhergehenden Ansprüche, **dadurch gekennzeichnet, dass** aus der gehärteten Zusammensetzung Formkörper hergestellt werden, wobei die Zusammensetzung vorzugsweise mittels VARTM-Technologie in eine Form für die Aushärtung zum Formkörper eingebracht wird.

**14.** Härtbare Zusammensetzung, geeignet für ein Verfahren gemäß einem der vorhergehenden Ansprüche, wobei die Zusammensetzung durch Erwärmen auf Temperaturen von größer oder gleich 60 °C härtbar ist und folgende Bestandteile enthält

(a) mindestens ein Polymer (S) erhältlich durch Reaktion von mindestens einer Verbindung mit zwei Aldehydgruppen und mindestens einer Acrylatverbindung (B), ausgewählt aus der Gruppe bestehend aus Acrylatverbindungen mit mehr als zwei Acrylatgruppen (By) und Diacrylatverbindungen (B2),
wobei die mindestens eine Verbindung mit zwei Aldehydgruppen ein aromatischer Dialdehyd ist mit auf die Bindungen der beiden Aldehydgruppen bezogener gewinkelter Molekülstruktur,
(b) optional mindestens eine Verbindung (S1) mit einer α-(1'-Hydroxyalkyl)acrylatgruppe,
(c) mindestens eine Verbindung (C), die mindestens zwei Thiolgruppen trägt,
(d) optional mindestens einen Reaktivverdünner (D) mit einem zahlenmittleren Molekulargewicht $M_n$ von weniger als 1000 g/mol, der mindestens zwei (Meth)Acrylatgruppen aufweist,
(e) optional mindestens einen Katalysator (E), der die Anlagerung von Thiolgruppen an Acrylatgruppen zu beschleunigen vermag, und
(f) optional mindestens einen Photoinitiator (F).

**15.** Härtbare Zusammensetzung gemäß Anspruch 14, wobei die mindestens eine Verbindung mit zwei Aldehydgruppen ausgewählt ist aus Phthalaldehyd, Isophthalaldehyd und deren Gemisch, wobei weitere Carbonylverbindungen, insbesondere Terephthalaldehyd und/oder Benzaldehyd zur Herstellung des Polymers (S) mitverwendet werden können.

**16.** Verwendung der Zusammensetzung gemäß einem der Ansprüche 14 bis 15 für das Verfahren gemäß einem der Ansprüche 1 bis 13.

**17.** Gehärtete Zusammensetzung herstellbar durch das Verfahren gemäß einem der Ansprüche 1 bis 13, wobei es sich vorzugsweise um einen Polymerverbundwerkstoff, insbesondere um einen Faserverbundwerkstoffund ganz besosnders bevorzugt um einen Glasfaserverbundwerkstoff oder um einen Carbonfaserverbundwerkstoff handelt.

## Claims

**1.** A process for the curing of curable compositions where

- at least one heat-curable composition is provided, and
- the composition is hardened by heating to temperatures greater than or equal to 60°C,

where the curable composition comprises at least the following constituents:

(a) at least one polymer (S) obtainable via reaction of at least one compound having two aldehyde groups and of at least one acrylate compound (B) selected from the group consisting of acrylate compounds having more than two acrylate groups (By) and diacrylate compounds (B2),
where the at least one compound having two aldehyde groups is an aromatic dialdehyde with molecular structure where the bonds to the two aldehyde groups are at an angle to one another,
(b) optionally at least one nonpolymeric compound selected from compounds (S1) having an α-(1'-hydroxyalkyl)acrylate group and compounds (S2) having two or more α-(1'-hydroxyalkyl)acrylate groups,
(c) at least one compound (C) which bears at least two thiol groups,

(d) optionally at least one reactive diluent (D) with number-average molar mass $M_n$ that is preferably less than 1000 g/mol, and preferably having at least two (meth)acrylate groups,

(e) optionally at least one catalyst (E) which can accelerate the addition reaction between thiol groups and acrylate groups, and

(f) optionally at least one photoinitiator (F).

**2.** The process according to claim 1, wherein the curable composition exhibits a viscosity increase of less than 100 000 mPa s within a period of 4 h at room temperature.

**3.** The process according to either of the preceding claims, wherein the compound having two or more aldehyde groups is selected from phthalaldehyde, isophthalaldehyde, and a mixture of these, and it is possible here to make concomitant use of other carbonyl compounds, in particular terephthalaldehyde and/or benzaldehyde, for the production of the polymer (S).

**4.** The process according to any of the preceding claims, wherein the diacrylate compounds (B2) are difunctional acrylates of alkanediols, cycloalkanediols, lower polyalkylene glycols or diamines, and wherein the acrylate compounds (By) are selected from the group consisting of polyether acrylates, polyester acrylates, acrylated polyacrylatols, urethane acrylates, and acrylic esters of optionally alkoxylated polyols.

**5.** The process according to any of the preceding claims, wherein the acrylate compounds (By) and (B2) are selected from the group consisting of ethylene glycol diacrylate, 1,2-propanediol diacrylate, 1,3-propanediol diacrylate, 1,3-butanediol diacrylate, 1,4-butanediol diacrylate, 1,5-pentanediol diacrylate, 1,6-hexanediol diacrylate, 1,8-octanediol diacrylate, neopentyl glycol diacrylate, 1,1-cyclohexanedimethanol diacrylate, 1,2-cyclohexanedimethanol diacrylate, 1, 3-cyclohexanedimethanol diacrylate, 1,4-cyclohexanedimethanol diacrylate, 1,2-cyclohexanediol diacrylate, 1,3-cyclohexanediol diacrylate, 1,4-cyclohexanediol diacrylate, diethylene glycol diacrylate, dipropylene glycol diacrylate, tripropylene glycol diacrylate, N,N'-bisacryloyl-2,2-diaminoethane, N,N'-bisacryloyl-1,6-diaminohexane, N,N'-bisacryloylpiperazine, trimethylolpropane triacrylate, ditrimethylolpropane pentaacrylate, ditrimethylolpropane hexaacrylate, pentaerythritol triacrylate, pentaerythritol tetraacrylate, glycerol diacrylate, glycerol triacrylate, di- or polyacrylates of sugar alcohols, for example sorbitol, mannitol, diglycerol, threitol, erythritol, adonitol (ribitol), arabitol (lyxitol), xylitol, dulcitol (galactitol), maltitol or isomaltol, di- or polyacrylates of polyester polyols, di- or polyacrylates of polyetherols, di- or polyacrylates of polyTHF with molecular weight from 162 to 2000, di- or polyacrylates of poly-1,3-propanediol with molecular weight from 134 to 1178, di- or polyacrylates of polyethylene glycol with molecular weight from 106 to 898, and also urethane di- and polyacrylates and polycarbonate di- and polyacrylates.

**6.** The process according to any of the preceding claims, wherein the acrylate compound is a diacrylate compound (B2) and is selected from the group consisting of ethylene glycol diacrylate, 1,2-propanediol diacrylate, 1,3-propanediol diacrylate, 1,4-butanediol diacrylate, and 1,6-hexanediol diacrylate.

**7.** The process according to any of the preceding claims, wherein the compounds (C) having at least two thiol groups are compounds (C1) of the formula

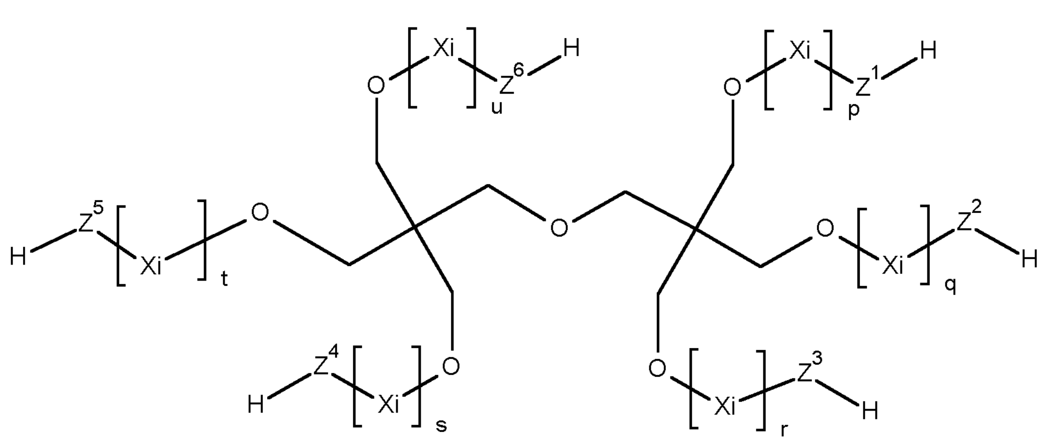

or compounds (C2) of the formula

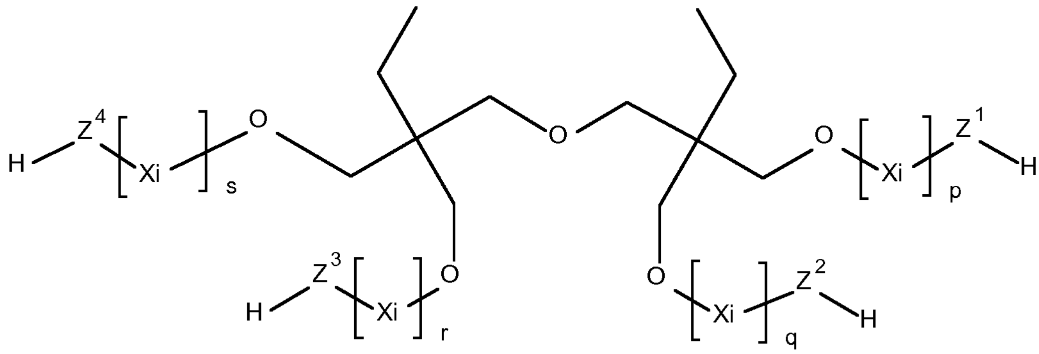

or compounds (C3) of the formula

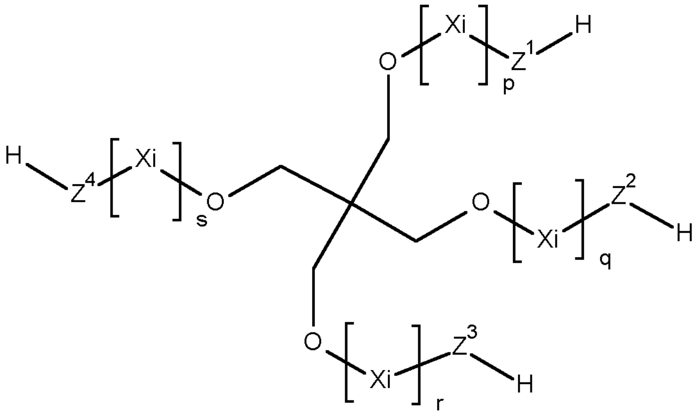

in which $Z^1$, $Z^2$, $Z^3$, $Z^4$, $Z^5$ and $Z^6$ are in each case mutually independently a single bond or a moiety of the formula -(C=O)-$R^3$-S-, $R^3$ is a divalent $C_1$- to $C_6$-alkylene moiety, p, q, r, s, t, u in each case mutually independently zero or a positive integer from 1 to 5, preferably zero or a positive integer from 1 to 4, and particularly preferably zero or a positive integer from 1 to 3, and very particularly preferably zero, each $X_i$ for i = from 1 to p, from 1 to q, from 1 to r, from 1 to s, from 1 to t and from 1 to u can be selected mutually independently from the group consisting of $-CH_2-CH_2-O-$, $-CH_2-CH(CH_3)-O-$, $-CH(CH_3)-CH_2-O-$, $-CH_2-C(CH_3)_2-O-$, $-C(CH_3)_2-CH_2-O-$, $-CH_2-CHVin-O-$, $-CHVin-CH_2-O-$, $-CH_2-CHPh-O-$ and $-CHPh-CH_2-O-$, preferably from the group of $-CH_2-CH_2-O-$, $-CH_2-CH(CH_3)-O-$ and $-CH(CH_3)-CH_2-O-$, and particularly preferably $-CH_2-CH_2-O-$, in which Ph is phenyl and Vin is vinyl, with the proviso that in the case of the compounds (C1) at least four, preferably at least five, and particularly preferably all six, of the moieties $Z^1$ to $Z^6$ are a group of the formula -(C=O)-$R^3$-S-, and in the case of the compounds (C2) and (C3) at least three, preferably all four, moieties $Z^1$ to $Z^4$ are a group of the formula -(C=O)-$R^3$-S-.

**8.** The process according to any of claims 1 to 5, wherein the compounds (C) having at least two thiol groups are di- or trifunctional compounds (C4) of the formula

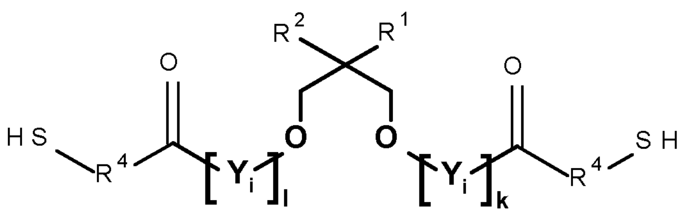

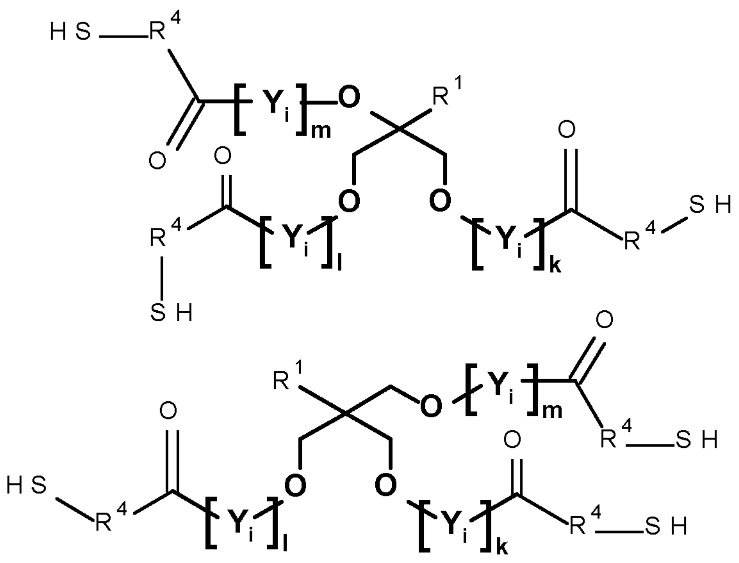

in which $R^1$ and $R^2$ are in each case mutually independently hydrogen or a $C_1$- to $C_4$-alkyl moiety, $R^4$ is methylene or 1,2-ethylene, k, l, m, n are in each case mutually independently zero or a positive integer from 1 to 5, preferably zero or a positive integer from 1 to 4, and particularly preferably zero or a positive integer from 1 to 3, each $Y_i$ for i = from 1 to k, from 1 to l, from 1 to m, and from 1 to n can be selected mutually independently from the group consisting of $-CH_2-CH_2-O-$, $-CH_2-CH(CH_3)-O-$, $-CH(CH_3)-CH_2-O-$, $-CH_2-C(CH_3)_2-O-$, $-C(CH_3)_2-CH_2-O-$, -CH$_2$-CH-Vin-O-, -CHVin-CH$_2$-O-, -CH$_2$-CHPh-O- and -CHPh-CH$_2$-O-, preferably from the group of $-CH_2-CH_2-O-$, $-CH_2-CH(CH_3)-O-$ and $-CH(CH_3)-CH_2-O-$, and particularly preferably $-CH_2-CH_2-O-$, in which Ph is phenyl and Vin is vinyl.

9. The process according to any of the preceding claims, wherein compound (C) is selected from the group consisting of ethylene glycol di(3-mercaptopropionate) (GDMP), trimethylolpropane tri(3-mercaptopropionate) (TMPMP), trimethylolpropane trimercaptoacetate (TMPMA), 3-mercaptopropionic ester of poly-1,2-propylene glycol with molar mass from 500 to 2500 g/mol, or 3-mercaptopropionic ester of ethoxylated trimethylolpropane with molar mass up to 1500 g/mol, pentaerythritol tetra(3-mercapotopropionate) (PETMP), pentaerythritol tetramercaptoacetate (PETMA), dipentaerythritol tetra(3-mercaptopropionate), dipentaerythritol tetramercaptoacetate, dipentaerythritol penta(3-mercaptopropionate), dipentaerythritol pentamercaptoacetate, dipentaerythritol hexa(3-mercaptopropionate), dipentaerythritol hexamercaptoacetate, ditrimethylolpropane tetra(3-mercaptopropionate), ditrimethylolpropane tetramercaptoacetate, and also alkoxylated, for example ethoxylated and/or propoxylated, preferably ethoxylated, products of these.

10. The process according to any of the preceding claims, wherein the catalyst (E) is selected from the group consisting of primary, secondary, and tertiary amines, primary, secondary, and tertiary phosphines, quaternary ammonium and phosphonium salts, imines, and iminium salts.

11. The process according to any of the preceding claims, which is a process selected from the group consisting of injection molding, injection-compression molding, flow molding, reaction injection molding (RIM), RTM (resin transfer molding), VARTM (vacuum assisted RTM), tape layup processes, coil coating, filament winding, manual lamination, pultrusion, hot reactive adhesive bonding, and high-temperature-hardening coating processes.

12. The process according to any of the preceding claims, wherein the curable composition comprises the following constituents:

(a) from 10 to 80% by weight of the polymer (S),
(b) in total from 0 to 80% by weight of the compounds (S1) and (S2),
(c) from 10 to 70% by weight, preferably from 25 to 60% by weight, of the compound (C),
(d) from 0 to 60% by weight, preferably from 5 to 30% by weight, of the reactive diluent (D), (f) from 0 to 10% by weight, preferably from 0.1 to 5% by weight, of photoinitiator (F),

with the proviso that the sum is always 100% by weight, where the stoichiometric ratio of thiol groups in (C) to

acrylate groups in (S), (S1), and (S2) is preferably from 0.2:1 to 3.8:1, or from 0.8:1 to 2.5:1.

**13.** The process according to any of the preceding claims, wherein moldings are produced from the cured composition, where the composition is preferably introduced by means of VARTM technology into a mold for hardening to give the molding.

**14.** A curable composition suitable for a process according to any of the preceding claims, where the composition is curable via heating to temperatures greater than or equal to 60°C and comprises the following constituents:

(a) at least one polymer (S) obtainable via reaction of at least one compound having two aldehyde groups and of at least one acrylate compound (B) selected from the group consisting of acrylate compounds having more than two acrylate groups (By) and diacrylate compounds (B2),
where the at least one compound having two aldehyde groups is an aromatic dialdehyde with molecular structure where the bonds to the two aldehyde groups are at an angle to one another,
(b) optionally at least one compound (S1) having an $\alpha$-(1'-hydroxyalkyl)acrylate group,
(c) at least one compound (C) which bears at least two thiol groups,
(d) optionally at least one reactive diluent (D) with number-average molar mass $M_n$ that is less than 1000 g/mol, and having at least two (meth)acrylate groups,
(e) optionally at least one catalyst (E) which can accelerate the addition reaction between thiol groups and acrylate groups, and
(f) optionally at least one photoinitiator (F).

**15.** The curable composition according to claim 14, where the at least one compound having two aldehyde groups is selected from phthalaldehyde, isophthalaldehyde, and a mixture of these, and it is possible here to make concomitant use of other carbonyl compounds, in particular terephthalaldehyde and/or benzaldehyde, for the production of the polymer (S).

**16.** The use of the composition according to either of claims 14 and 15 for the process according to any of claims 1 to 13.

**17.** A cured composition that can be produced via the process according to any of claims 1 to 13, which is preferably a polymer composite material, in particular a fiber composite material and very particularly preferably a glassfiber composite material or a carbon fiber composite material.

## Revendications

**1.** Procédé de durcissement de compositions durcissables, selon lequel

- au moins une composition durcissable par chauffage est mise à disposition, et
- un durcissement de la composition est effectué par chauffage à des températures supérieures ou égales à 60 °C,

la composition durcissable contenant au moins les constituants suivants :

(a) au moins un polymère (S) pouvant être obtenu par réaction d'au moins un composé contenant deux groupes aldéhyde et d'au moins un composé d'acrylate (B), choisi dans le groupe constitué par les composés d'acrylate contenant plus de deux groupes acrylate (By) et les composés de diacrylate (B2),
ledit au moins un composé contenant deux groupes aldéhyde étant un dialdéhyde aromatique ayant une structure moléculaire coudée par rapport aux liaisons des deux groupes aldéhyde,
(b) éventuellement au moins un composé non polymère, choisi parmi les composés (S1) contenant un groupe acrylate d'$\alpha$-(1'-hydroxyalkyle) et les composés (S2) contenant deux groupes acrylate d'$\alpha$-(1'-hydroxyalkyle) ou plus,
(c) au moins un composé (C) qui porte au moins deux groupes thiol,
(d) éventuellement au moins un diluant réactif (D) ayant un poids moléculaire moyen en nombre $M_n$ de préférence inférieur à 1 000 g/mol, qui comprend de préférence au moins deux groupes (méth)acrylate,
(e) éventuellement au moins un catalyseur (E), qui peut accélérer l'addition de groupes thiol sur des groupes acrylate, et
(f) éventuellement au moins un photoinitiateur (F).

2. Procédé selon la revendication 1, **caractérisé en ce que** la composition durcissable présente à température ambiante en l'espace de 4 h une augmentation de la viscosité de moins de 100 000 mPa s.

3. Procédé selon l'une quelconque des revendications précédentes, **caractérisé en ce que** le composé contenant deux groupes aldéhyde ou plus est choisi parmi le phtalaldéhyde, l'isophtalaldéhyde et leur mélange, d'autres composés de carbonyle, notamment le téréphtalaldéhyde et/ou le benzaldéhyde pouvant être utilisés pour la fabrication du polymère (S).

4. Procédé selon l'une quelconque des revendications précédentes, **caractérisé en ce que** les composés de diacrylate (B2) consistent en des acrylates bifonctionnels d'alcane-diols, de cycloalcane-diols, de polyalkylène glycols inférieurs ou de diamines, et **en ce que** les composés d'acrylate (By) sont choisis dans le groupe constitué par les polyéther-acrylates, les polyester-acrylates, les polyacrylatols acrylés, les acrylates d'uréthane et les esters de l'acide acrylique de polyols éventuellement alcoxylés.

5. Procédé selon l'une quelconque des revendications précédentes, **caractérisé en ce que** les composés d'acrylate (By) et (B2) sont choisis dans le groupe constitué par le diacrylate d'éthylène glycol, le diacrylate de 1,2-propanediol, le diacrylate de 1,3-propanediol, le diacrylate de 1,3-butanediol, le diacrylate de 1,4-butanediol, le diacrylate de 1,5-pentanediol, le diacrylate de 1,6-hexanediol, le diacrylate de 1,8-octanediol, le diacrylate de néopentyl-glycol, le diacrylate de 1,1-cyclohexanediméthanol, le diacrylate de 1,2-cyclohexanediméthanol, le diacrylate de 1,3-cyclohexanediméthanol, le diacrylate de 1,4-cyclohexanediméthanol, le diacrylate de 1,2-cyclohexanediol, le diacrylate de 1, 3-cyclohexanediol, le diacrylate de 1,4-cyclohexanediol, le diacrylate de diéthylène glycol, le diacrylate de dipropylène glycol, le diacrylate de tripropylène glycol, le N,N'-bisacryloyl-2,2-diaminoéthane, le N,N'-bisacryloyl-1,6-diamino-hexane, la N,N'-bis-acryloyl-pipérazine, le triacrylate de triméthylolpropane, le pentaacrylate de ditriméthylolpropane, l'hexaacrylate de ditriméthylolpropane, le triacrylate de pentaérythrite, le tétraacrylate de pentaérythrite, le diacrylate de glycérine, le triacrylate de glycérine, les di- ou polyacrylates d'alcools de sucres, tels que par exemple le sorbitol, le mannitol, le diglycérol, le thréitol, l'érythritol, l'adonitol (ribitol), l'arabitol (lyxitol), le xylitol, le dulcitol (galactitol), le maltitol ou l'isomaltol, les di- ou polyacrylates de polyester-polyols, les di- ou polyacrylates de polyétherols, les di- ou polyacrylates de poly-THF ayant une masse molaire comprise entre 162 et 2 000, les di- ou polyacrylates de poly-1,3-propanediol ayant une masse molaire comprise entre 134 et 1 178, les di- ou polyacrylates de polyéthylène glycol ayant une masse molaire comprise entre 106 et 898, ainsi que les di- ou polyacrylates d'uréthane, et les di- ou polyacrylates de polycarbonate.

6. Procédé selon l'une quelconque des revendications précédentes, **caractérisé en ce que** le composé d'acrylate est un composé de diacrylate (B2) et est choisi dans le groupe constitué par le diacrylate d'éthylène glycol, le diacrylate de 1,2-propanediol, le diacrylate de 1,3-propanediol, le diacrylate de 1,4-butanediol et le diacrylate de 1,6-hexanediol.

7. Procédé selon l'une quelconque des revendications précédentes, **caractérisé en ce que** les composés (C) contenant au moins deux groupes thiol consistent en des composés (C1) de formule

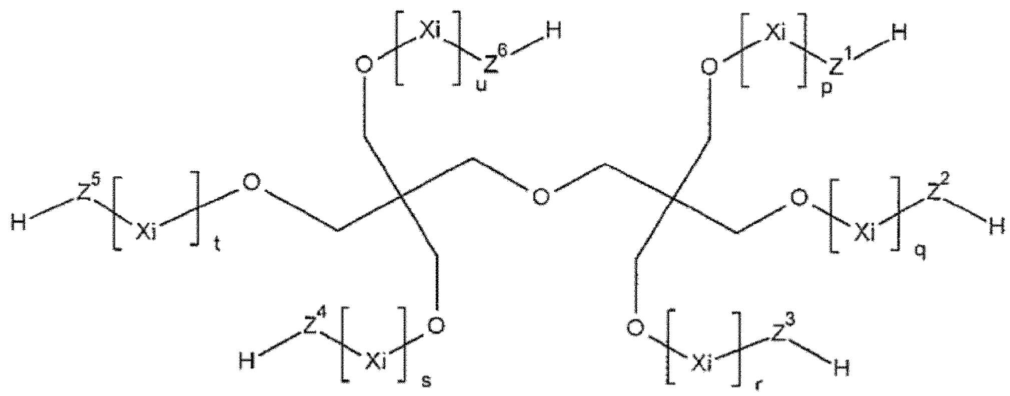

ou en des composés (C2) de formule

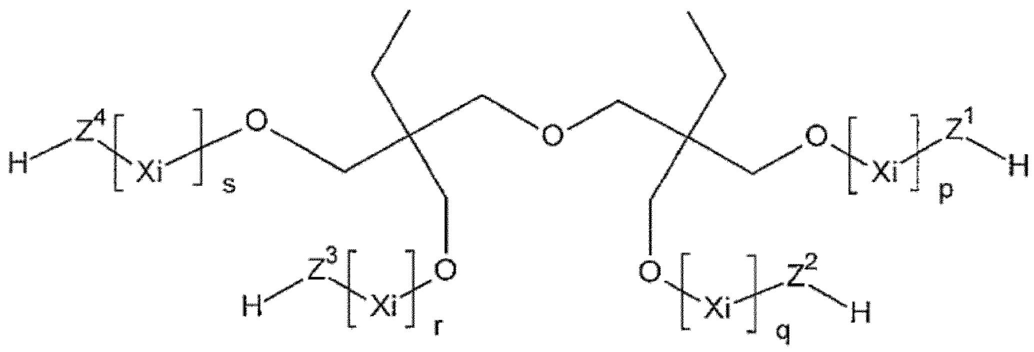

ou en des composés (C3) de formule

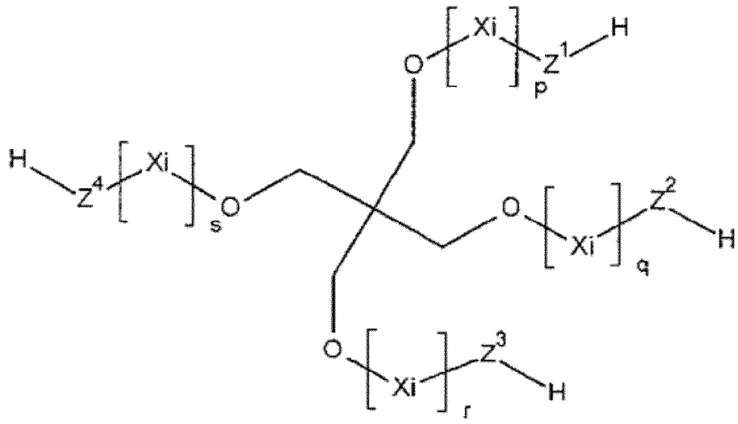

dans lesquelles

$Z^1$, $Z^2$, $Z^3$, $Z^4$, $Z^5$ et $Z^6$ représentent chacun indépendamment les uns des autres une simple liaison ou un radical de formule $-(C{=}O)-R^3-S-$,
$R^3$ représente un radical alkylène en $C_1$ à $C_6$ bivalent, p, q, r, s, t, u chacun indépendamment les uns des autres zéro ou un nombre entier positif de 1 à 5, de préférence zéro ou un nombre entier positif de 1 à 4, et de manière particulièrement préférée zéro ou un nombre entier positif de 1 à 3, et de manière tout particulièrement préférée zéro,
chacun des $X_i$ pour i = 1 à p, 1 à q, 1 à r, 1 à s, 1 à t et 1 à u peuvent être choisis indépendamment les uns des autres dans le groupe constitué par
$-CH_2-CH_2-O-$, $-CH_2-CH(CH_3)-O-$, $-CH(CH_3)-CH_2-O-$, $-CH_2-C(CH_3)_2-O-$, $-C(CH_3)_2-CH_2-O-$, $-CH_2-CHVin-O-$, $-CHVin-CH_2-O-$, $-CH_2-CHPh-O-$ et $-CHPh-CH_2-O-$, de préférence dans le groupe constitué par $-CH_2-CH_2-O-$, $-CH_2-CH(CH_3)-O-$ et $-CH(CH_3)-CH_2-O-$, et de manière particulièrement préférée $-CH_2-CH_2-O-$,
Ph représentant phényle et Vin représentant vinyle,
à condition que, dans le cas des composés (C1), au moins quatre des, de préférence au moins cinq des et de manière particulièrement préférée les six radicaux $Z^1$ à $Z^6$ représentent un groupe de formule $-(C{=}O)-R^3-S-$ et, dans le cas des composés (C2) et (C3), au moins trois des, de préférence les quatre radicaux $Z^1$ à $Z^4$ représentent un groupe de formule $-(C{=}O)-R^3-S$.

8. Procédé selon l'une quelconque des revendications 1 à 5, **caractérisé en ce que** les composés (C) contenant au moins deux groupes thiol consistent en des composés (C4) de fonctionnalité deux ou trois de formule

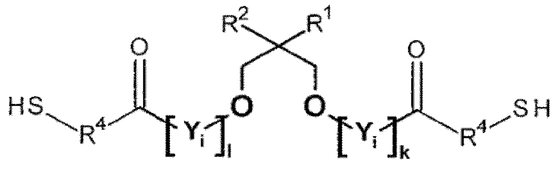

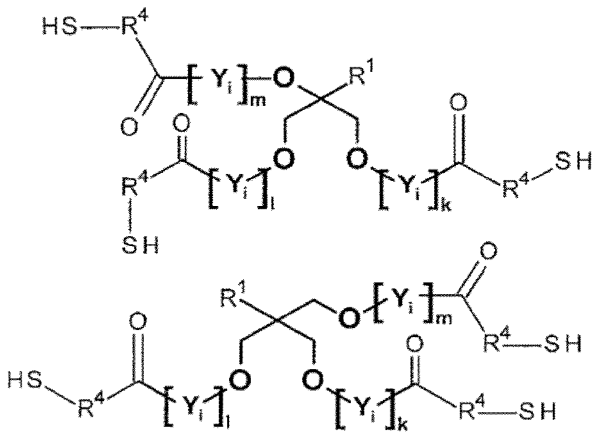

dans lesquelles

$R^1$, $R^2$ représentent chacun indépendamment l'un de l'autre l'hydrogène ou un radical alkyle en $C_1$ à $C_4$,
$R^4$ représente méthylène ou 1,2-éthylène, k, l, m, n représentent chacun indépendamment les uns des autres zéro ou un nombre entier positif de 1 à 5, de préférence zéro ou un nombre entier positif de 1 à 4, et de manière particulièrement préférée zéro ou un nombre entier positif de 1 à 3,
chacun des $Y_i$ pour i = 1 à k, 1 à l, 1 à m et 1 à n peuvent être choisis indépendamment les uns des autres dans le groupe constitué par
$-CH_2-CH_2-O-$, $-CH_2-CH(CH_3)-O-$, $-CH(CH_3)-CH_2-O-$, $-CH_2-C\{CH_3)_2-O-$, $-C(CH_3)_2-CH_2-$ O-, $-CH_2$-CHVin-O-, -CHVin-$CH_2$-O-, $-CH_2$-CHPh-O- et -CHPh-$CH_2$-O-, de préférence dans le groupe constitué par $-CH_2-CH_2-O-$, $-CH_2-CH(CH_3)-O-$ et $-CH(CH_3)-CH_2-O-$, et de manière particulièrement préférée $-CH_2-CH_2-O-$, Ph représentant phényle et Vin représentant vinyle.

**9.** Procédé selon l'une quelconque des revendications précédentes, **caractérisé en ce que** le composé (C) est choisi dans le groupe constitué par le di-(3-mercaptopropionate) d'éthylène glycol (GDMP), le tri-(3-mercaptopropionate) de triméthylolpropane (TMPMP), le trimercaptoacétate de triméthylolpropane (TMPMA), l'ester de l'acide 3-mercaptopropionique de poly-1,2-propylène glycol d'une masse molaire de 500 à 2 500 g/mol ou l'ester de l'acide 3-mercaptopropionique de triméthylolpropane éthoxylé d'une masse molaire de jusqu'à 1 500 g/mol, le tétra-(3-mercaptopropionate) de pentaérythritol (PETMP), le tétramercaptoacétate de pentaérythritol (PETMA), le tétra-(3-mercaptopropionate) de di-pentaérythritol, le tétramercaptoacétate de di-pentaérythritol, le penta-(3-mercaptopropionate) de di-pentaérythritol, le pentamercaptoacétate de dipentaérythritol, l'hexa-(3-mercaptopropionate) de di-pentaérythritol, l'hexamercaptoacétate de di-pentaérythritol, le tétra-(3-mercaptopropionate) de di-triméthylolpropane, le tétramercaptoacétate de di-triméthylolpropane, ainsi que leurs produits alcoxylés, par exemple éthoxylés et/ou propoxylés, de préférence éthoxylés.

**10.** Procédé selon l'une quelconque des revendications précédentes, **caractérisé en ce que** le catalyseur (E) est choisi dans le groupe constitué par les amines primaires, secondaires et tertiaires, les phosphines primaires, secondaires et tertiaires, les sels d'ammonium ou de phosphonium quaternaires, les imines et les sels d'iminium.

**11.** Procédé selon l'une quelconque des revendications précédentes, **caractérisé en ce qu'**il s'agit d'un procédé choisi dans le groupe constitué par le moulage par injection, le moulage par injection-compression, l'extrusion, le moulage par injection réactif (Reaction Injection Moulding = RIM), RTM (Resin Transfer Moulding), VARTM (Vacuum Assisted RTM), les procédés à bande, le prélaquage en continu, l'enroulement filamentaire, la stratification manuelle, la pultrusion, le collage réactif à chaud et les revêtements durcissant à la chaleur.

**12.** Procédé selon l'une quelconque des revendications précédentes, **caractérisé en ce que** la composition durcissable contient les constituants suivants :

(a) 10 à 80 % en poids du polymère (S),
(b) ensemble 0 à 80 % en poids des composés (S1) et (S2),
(c) 10 à 70, de préférence 25 à 60 % en poids du composé (C),
(d) 0 à 60, de préférence 5 à 30 % en poids du diluant réactif (D),
(f) 0 à 10, de préférence 0,1 à 5 % en poids du photoinitiateur (f),

à condition que la somme soit toujours de 100 % en poids, le rapport stoechiométrique entre les groupes thiol dans (C) et les groupes acrylate dans (S), (S1) et (S2) étant de préférence de 0,2:1 à 3,8:1 ou de 0,8:1 à 2,5:1.

**13.** Procédé selon l'une quelconque des revendications précédentes, **caractérisé en ce que** des corps moulés sont fabriqués à partir de la composition durcie, la composition étant de préférence introduite par la technologie VARTM dans un moule pour le durcissement en le corps moulé.

**14.** Composition durcissable, appropriée pour un procédé selon l'une quelconque des revendications précédentes, la composition étant durcissable par chauffage à des températures supérieures ou égales à 60 °C, et contenant les constituants suivants :

(a) au moins un polymère (S) pouvant être obtenu par réaction d'au moins un composé contenant deux groupes aldéhyde et d'au moins un composé d'acrylate (B), choisi dans le groupe constitué par les composés d'acrylate contenant plus de deux groupes acrylate (By) et les composés de diacrylate (B2),
ledit au moins un composé contenant deux groupes aldéhyde étant un dialdéhyde aromatique ayant une structure moléculaire coudée par rapport aux liaisons des deux groupes aldéhyde,
(b) éventuellement au moins un composé (S1) contenant un groupe acrylate d'$\alpha$-(1'-hydroxyalkyle),
(c) au moins un composé (C) qui porte au moins deux groupes thiol,
(d) éventuellement au moins un diluant réactif (D) ayant un poids moléculaire moyen en nombre $M_n$ inférieur à 1 000 g/mol, qui comprend au moins deux groupes (méth)acrylate,
(e) éventuellement au moins un catalyseur (E), qui peut accélérer l'addition de groupes thiol sur des groupes acrylate, et
(f) éventuellement au moins un photoinitiateur (F).

**15.** Composition durcissable selon la revendication 14, dans laquelle ledit au moins un composé contenant deux groupes aldéhyde est choisi parmi le phtalaldéhyde, l'isophtalaldéhyde et leur mélange, d'autres composés de carbonyle, notamment le téréphtalaldéhyde et/ou le benzaldéhyde pouvant être utilisés pour la fabrication du polymère (S).

**16.** Utilisation de la composition selon l'une quelconque des revendications 14 à 15 pour le procédé selon l'une quelconque des revendications 1 à 13.

**17.** Composition durcie pouvant être fabriquée par le procédé selon l'une quelconque des revendications 1 à 13, celle-ci consistant de préférence en un matériau composite polymère, notamment en un matériau composite fibreux et de manière tout particulièrement préférée en un matériau composite de fibres de verre ou en un matériau composite de fibres de carbone.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 2287229 A1
- EP 1275668 A
- WO 2012126695 A
- WO 2005057286 A
- WO 2014152850 A
- WO 2011141424 A
- US 5380901 A
- WO 9828252 A
- EP 7508 A
- EP 57474 A
- DE 19618720 A
- EP 495751 A
- EP 615980 A
- DE 19826712 A
- DE 19913353 A
- WO 9833761 A
- DE 19957900 A1


### In der Beschreibung aufgeführte Nicht-Patentliteratur


- **A.K. O'BRIAN ; N.B. CRAMER ; C.N. BOWMAN.** Oxygen inhibition in Thiol-Acrylate Photopolymerizations. *J. Polym. Sci., Part A: Polym. Chem.,* 2006, vol. 44, 2007-2014
- *Methode zur Bestimmung der Polydispersität ist im Analytiker Taschenbuch,* 1984, vol. 4, 433-442
- Ullmanns Enzyklopädie der technischen Chemie. vol. 19, 62-65
- **H. FREY et al.** *Acta Polym.,* 1997, vol. 48, 30-35
- Advances in Polymer Science. Springer, 1974, vol. 14
- **K. K. DIETLIKER.** Chemistry and Technology of UV- and EB-Formulation for Coatings. *Inks and Paints,* vol. 3
- Photoinitiators for Free Radical and Cationic Polymerization. SI-TA Technology Ltd